(19) Europäisches Patentamt
European Patent Office
Office européen des brevets

(11) EP 1 950 254 B1

(12) # EUROPEAN PATENT SPECIFICATION

(45) Date of publication and mention of the grant of the patent:
**04.08.2010 Bulletin 2010/31**

(51) Int Cl.:
*C09B 67/00 (2006.01)* *C09B 67/08 (2006.01)*
*C09B 67/10 (2006.01)* *C09B 67/40 (2006.01)*
*C08F 2/44 (2006.01)* *C09D 11/02 (2006.01)*

(21) Application number: **08000574.7**

(22) Date of filing: **14.01.2008**

(54) **Method of producing an organic pigment fine particle dispersion, and organic pigment fine particles and an organic pigment fine particle dispersion obtained by the method**

Verfahren zur Herstellung von organischer Pigment-Feinpartikeldispersion und organische Pigment-Feinpartikel und eine organische Pigment-Feinpartikeldispersion daraus

Procédé de production de dispersion de particule fine de pigment organique, et particules fines de pigment organique, et dispersion de fine particule de pigment organique obtenue par ce procédé

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **12.01.2007 JP 2007005168**

(43) Date of publication of application:
**30.07.2008 Bulletin 2008/31**

(73) Proprietor: **FUJIFILM Corporation**
**Minato-ku**
**Tokyo 106-8620 (JP)**

(72) Inventors:
- **Kyota, Hirokazu**
**Ashigarakami-gun**
**Kanagawa 258-8577 (JP)**
- **Sato, Tadahisa**
**Ashigarakami-gun**
**Kanagawa 258-8577 (JP)**

(74) Representative: **HOFFMANN EITLE**
**Patent- und Rechtsanwälte**
**Arabellastrasse 4**
**81925 München (DE)**

(56) References cited:
**EP-A- 0 475 075**
**WO-A-2006/132443**
**US-A1- 2005 075 416**
**US-A1- 2006 057 485**
**US-A1- 2007 012 221**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 950 254 B1

## Description

The present invention relates to a method of producing an organic pigment fine particle dispersion, and to an organic pigment fine particle dispersion and organic pigment fine particles which are obtained by the method. More specifically, the present invention relates to a method of producing an organic pigment fine particle dispersion by forming organic pigment fine particles in the presence of a polymerizable compound and polymerizing the polymerizable compound, and to an organic pigment fine particle dispersion and organic pigment fine particles which are obtained by the method. Further specifically, the present invention relates to a method of producing an organic pigment fine particle dispersion by forming the organic pigment fine particles in a micro-reaction site, and to an organic pigment fine particle dispersion and organic pigment fine particles which are obtained by the method.

BACKGROUND OF THE INVENTION

Pigments generally exhibit vivid color tone and high coloring power, and they are widely used in many fields. For example, the pigments are used in such applications as painting, printing inks, electrophotographic toners, inkjet inks, and color filters. Thus, pigments are now important materials essential for our everyday life. General properties, applications, and other aspects of pigments are described in, for example, "Dispersion Stabilization of Pigment and Surface Treatment Technique/Evaluation", Technical Information Institute Co., Ltd., 2001, pp. 123-224. In particular, examples of pigments that require high performance, and that are of particular importance in practical use, are ink-jet ink pigments, and color filter pigments.

Dyes have been used as the colorant for inkjet ink, but pigments are employed recently for solving the problems of the dyes, such as water resistance and light resistance. Images obtained by using pigment inks have advantages that they are superior in light resistance and water resistance to images formed by using dye-based inks. However, it is difficult to give fine particles uniform in nanometer size and having excellent monodispersity, thus the pigment particles can hardly penetrate into the pores on paper surface. As a result, such an image has a problem that the adhesiveness thereof to paper is weaker. Consequently, improvement thereof has been demanded.

Further, an important application of pigments includes a color filter for use in a CCD sensor. In particular, as a result of the increase in the number of pixels of a digital camera in recent year, there is increased need for reduction in thickness of the color filter. Organic pigments have been used in color filters, of which thickness depends significantly on the particle diameter of the organic pigment, and hence, in this field, it is needed to produce fine particles in a nanometer size, with having stability in a monodispersed state under control.

A method of producing organic pigment fine particles is roughly classified into a brake-down method of producing fine particles from a bulk substance by crushing or the like, and a build-up method of producing fine particles by particle growth in a vapor phase or a liquid phase (see "Experimental Chemical Lecture, 4th Edition" edited by the Chemical Society of Japan (Maruzen Co., Ltd.), vol. 12, pp. 411-488, etc.). In general, the breakdown method (crushing method) is widely used. However, according to this method, it is difficult to obtain an organic substance with a nanometer size level, the productivity is remarkably low, and substances applicable in this method are limited.

As a procedure for compensating for the above disadvantage, encapsulating pigment fine particles with resin has been proposed. (see, Technical Information Association, "Preparation and Dispersion/Aggregation Control of nano-fine particles and evaluation thereof 2003, Ch. 1, Sec. 4, (various synthesis methods of polymer-nano-fine particles and problems); Kengo YASUI, Kozue SUNOUCHI (Dainippon Ink and Chemicals, Inc.) "Increase in Resolution with Aqueous Pigment Ink" DIC TECH REV, 2004, No. 10, pp. 11-18; Hiroshi HARADA, Sadahiro INOUE (Dainippon Ink and Chemicals, Inc.) "Microcapsulated Pigment Jet Ink" DIC Tech Rev, 2003, No. 9, pp. 1-7; Masao TANAKA (Dainippon Ink and Chemicals, Inc.) "Micro/Nano Capsul Technique, Microcapsulation of Pigment, and Application to Ink Jet" Industrial Material, 2004, Vol. 52, No. 6, pp. 42-45, etc.). According to this method, an attempt is made so as to enhance water resistance and light resistance, and to increase a gloss regarding printing. However, the recent demand for the increase in resolution has not been satisfied sufficiently. This is because those methods depend upon the breakdown method, and fine particles cannot be regulated to a desired minute size. Further, this method requires to fine particles by grinding as much as possible and to adsorb resins to the particles completely, and thus this method takes a great amount of time and energy in terms of the productivity.

On the other hand, a method in which a pigment is dispersed with a dispersant have also been conducted. In this case, by merely allowing the dispersant to adsorb to the surface of the pigment, long-term stability, water resistance, and viscosity stability are insufficient. Further, when such the pigment is used as inkjet ink, due to the strong shear force at a time of the discharge from a nozzle, the dispersant disorbs from the pigment, deteriorates, and further clogs the nozzle, etc.

As to the above-mentioned subjects, a number of methods have been studied. Examples of the methods include chemical reforming of the surface of a pigment by oxidation or the like, and a chemical bond formation between a pigment surface and a dissoluble group by grafting or the like (see JP-A-10-316909, "JP-A" means unexamined published

Japanese patent application.). However, according to any of those methods, it is difficult to effect a reaction completely. As a result, quality of an obtained dispersion liquid are not improved. Besides the above, another measure to consider is to increase the content of a dispersant so as to ensure the stability. However, there arise the decrease in printing performance and the excessive increase in viscosity.

Further, a method of adding a polymerizable surfactant to a pigment obtained by a breakdown method, followed by emulsion polymerization (see JP-A-2005-97517) is known. However, in the emulsion polymerization disclosed herein, in order to allow a monomer completely to adsorb to the surfaces of pigment fine particles, a great amount of monomer is required. This method also depends upon the breakdown method, so that the size of a pigment is large, and it is necessary to make the pigment uniform in a finer size range. Further, according to this method, the energy consumption amount is large, since a crushing step is required, and it is necessary to switch the step facility so as to effect a polymerization reaction, resulting in low productivity.

Contrary to this, recently, a method of producing organic fine particles with a nanometer size by a build-up method has been studied. For example, there is a production method by a micro-chemical process (see European Patent Publication No. 1516896 A1 and JP-A-2005-307154). However, the recent high demand with respect to inkjet ink etc. is not satisfied, and there is still a demand for further improvement and development.

US2006/0057485 A describes a process of producing a colorant, comprising the steps of mixing a coloring material and a block copolymer in a flow channel of a microreactor to obtain a dispersion comprising a colorant as a dispersoid.

SUMMARY OF THE INVENTION

The present invention resides in a method of producing an organic pigment fine particle dispersion, which has the steps of:

providing a solution of an organic pigment and an aqueous medium, wherein a polymerizable compound represented by formula (1) is contained in at least one of the organic pigment solution and the aqueous medium;
mixing the solution and the aqueous medium to form fine particles of the pigment dispersed; and then
polymerizing the polymerizable compound;

Formula ( 1 )

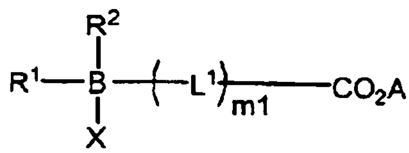

wherein, A represents a hydrogen atom, a typical metal atom, an ammonium group or an alkyl ammonium group; X represents a substituent having a C=C bond; B represents a carbon atom or an aromatic ring; $L^1$ represents a divalent linking group; ml represents 0 or an integer greater than 0; $R^1$ and $R^2$ each independently represent a hydrogen atom or a substituent, and at least one of $R^1$ and $R^2$ is a substituent having an alkyl group of 8 or more carbon atoms.

Further, the present invention resides in an organic pigment fine particle dispersion and organic pigment fine particles, which are obtained by the above producing method.

Other and further features and advantages of the invention will appear more fully from the following description, with taken in connection with the accompanying drawings.

BRIEF DESCRIPTION OF THE DRAWINGS

Fig. 1-1 is an plane view of one embodiment of a reactor for use in a method of the present invention, which reactor has a Y-shaped channel on one side.
Fig. 1-2 is a sectional view taken on line I-I of Fig. 1-1.
Fig. 2-1 is an vertical section view of one embodiment of a reactor for use in a method of the present invention, which reactor has a cylindrical tube-type channel in which a channel is provided to insert at one side thereof.
Fig. 2-2 is a sectional view taken on line IIa-IIa of Fig. 2-1.
Fig. 2-3 is a sectional view taken on line IIb-IIb of Fig. 2-1.
Fig. 3-1 is a plane view of one embodiment of a reactor for use in a method of the present invention, which reactor

has Y-shaped channels on both sides.
Fig. 3-2 is a sectional view taken on line III-III of Fig. 3-1.
Fig. 4 is an vertical section view of one embodiment of a reactor for use in a method of the present invention, which reactor has a cylindrical tube-type channel in which channels are provided to insert at both sides thereof.
FIG. 5 is a plane cross section view illustrating one embodiment of a plane-type micro-reactor for use in a method of the present invention.
FIG. 6 is a plane cross section view illustrating another embodiment of a plane-type micro-reactor for use in a method of the present invention.
FIG. 7 is a plane cross section view illustrating still another embodiment of a plane-type micro-reactor for use in a method of the present invention.
FIG. 8 is an exploded perspective view showing an exploded state of one embodiment of a three-dimensional micro-reactor for use in a method of the present invention.

## DETAILED DESCRIPTION OF THE INVENTION

According to the present invention, there is provided the following means:

(1) A method of producing an organic pigment fine particle dispersion, which comprises the steps of:

providing a solution of an organic pigment and an aqueous medium, wherein a polymerizable compound represented by formula (1) is contained in at least one of the organic pigment solution and the aqueous medium;
mixing the solution and the aqueous medium to form fine particles of the pigment dispersed; and then
polymerizing the polymerizable compound;

Formula ( 1 )

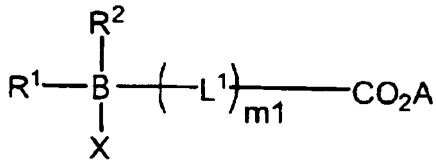

wherein, A represents a hydrogen atom, a typical metal atom, an ammonium group or an alkyl ammonium group; X represents a substituent having a C=C bond; B represents a carbon atom or an aromatic ring; $L^1$ represents a divalent linking group; ml represents 0 or an integer greater than 0; $R^1$ and $R^2$ each independently represent a hydrogen atom or a substituent, and at least one of $R^1$ and $R^2$ is a substituent having an alkyl group of 8 or more carbon atoms.
(2) The method of producing an organic pigment fine particle dispersion according to the above item (1), further comprising the steps of:

flowing the organic pigment solution and the aqueous medium into a channel to be a laminar flow; and
mixing said solution and said medium for bringing them into contact each other during passage in the channel by the laminar flow.

(3) The method of producing an organic pigment fine particle dispersion according to the above item (1) or (2), further comprising the steps of:

flowing the organic pigment solution and the aqueous medium into a channel having an equivalent diameter of 1 mm or less; and
mixing said solution and said medium for bringing them into contact each other.

(4) The method of producing an organic pigment fine particle dispersion according to any one of the above items (1) to (3), wherein the substituent X is a substituent having a group selected from the group consisting of a vinyloxy group, an aryloxy group, a styryl group, an acryloyl group, and a methacryloyl group.
(5) The method of producing an organic pigment fine particle dispersion according to any one of the above items (1) to (4), wherein the substituent X is a substituent having an aryloxy group.
(6) The method of producing an organic pigment fine particle dispersion according to any one of the above items

(1) to (5), wherein the linking group $L^1$ is a linking group having an ethyleneoxy group as a repeating unit.
(7) The method of producing an organic pigment fine particle dispersion according to any one of the above items (1) to (6), wherein the organic pigment solution is a solution of the organic pigment dissolved in the presence of an alkali.
(8) The method of producing an organic pigment fine particle dispersion according to any one of the above items (1) to (7), wherein the polymerizable compound is polymerized by radical polymerizing reaction under heating at a temperature of 50 °C or more in the presence of a compound having an azo group.
(9) The method of producing an organic pigment fine particle dispersion according to any one of the above items (1) to (8), wherein at least one of the organic pigment solution and the aqueous medium contains at least one monomer that can be copolymerized with the compound represented by formula (1).
(10) The method of producing an organic pigment fine particle dispersion according to any one of the above items (1) to (9), further comprising the steps of:

dividing at least one of liquid flows of the organic pigment solution and the aqueous medium, into plural divided flows, and
joining at least one of the plural divided flows with the other liquid flow in the manner that central axes of said flows intersect at one point in a junction region, and thereby
mixing the organic pigment solution and the aqueous medium.

(11) The method of producing an organic pigment fine particle dispersion according to the above item (10), further comprising the steps of:

providing channels radially extending from a center of the junction region, and
flowing the plural divided flows towards the center of the junction region, thereby joining the liquid flows at the region.

(12) The method of producing an organic pigment fine particle dispersion according to any one of the above items (1) to (11), wherein a continuous flow system is employed to control the liquid flow.
(13) The method of producing an organic pigment fine particle dispersion according to the above item (12), wherein the channel is entirely filled with the liquids.
(14) The method of producing an organic pigment fine particle dispersion according to any one of the above items (1) to (11), wherein a liquid plug system is employed to control the liquid flow.
(15) The method of producing an organic pigment fine particle dispersion according to the above item (14), wherein a droplet partitioned by air is formed and made to move in the channel.
(16) An organic pigment fine particle dispersion, which is obtained by the producing method according to any one of the above items (1) to (15), and comprises organic pigment fine particles having a mode diameter of 1 μm or less.
(17) Organic pigment fine particles, which are obtained by the producing method according to any one of the above items (1) to (15), and have a mode diameter of 1 μm or less.

Hereinafter, the method of producing an organic pigment fine particle dispersion of the present invention will be described in detail.

According to the method of producing an organic pigment fine particle dispersion of the present invention, a solution with an organic pigment dissolved therein and an aqueous medium are mixed, and in the course of the mixing, the pigment are allowed to form (precipitate) as fine particles. Examples of the method of mixing include a method of pouring the aqueous medium in the organic pigment solution, a method of pouring the organic pigment solution in the aqueous medium, and a method of concurrently mixing the organic pigment solution and the aqueous medium. In this case, it is preferable to accelerate the mixing further by stirring.

Further, in case of mixing using a channel, a method that the organic pigment solution and the aqueous medium are allowed to flow through a channel as a liquid flow, thereby mixing both the liquids under the condition that they are in contact, i.e. a continuous flow method, may also be performed. At this time, it is preferable to set both the liquids to be a laminar flow in the channel and bring them into contact with each other in the course of the laminar flow at a laminar flow interface. Any apparatus can be used as long as it has a channel capable of forming a laminar flow, and the flow path preferably has an equivalent diameter capable of forming a micro-reaction site.

The equivalent diameter is a term also called a corresponding diameter, which is used in mechanical engineering field. If a cylindrical pipe equivalent to the pipe (channel in the present invention) having any sectional shape is assumed, the diameter of the equivalent cylindrical pipe corresponds to the equivalent diameter. The equivalent diameter ($d_{eq}$) is defined as $d_{eq}$=4A/p in which A is a sectional area of the pipe, and p is a wetted perimeter length (circumferential length) of the pipe. In the case of the cylindrical pipe, this equivalent diameter corresponds to the diameter of the cylindrical

pipe. The equivalent diameter is used for presuming fluidity or heat conducting characteristic of the pipe on the basis of data of the equivalent cylindrical pipe, and expresses a spatial scale (a representative length) of a phenomenon. The equivalent diameter is: $d_{eq}=4a^2/4a=a$ in a squared pipe having a side (a); $d_{eq}=a/\sqrt{3}$ in an equilateral triangular pipe having a side (a); and $d_{eq}=2h$ in a flow between paralleled plates having a channel height (h) (see, for example, edited by Nippon Kikai Gakkai, "Kikai Kougaku Jiten," 1997, published by Maruzen, K. K.).

When causing water to flow into a pipe, inserting a narrow pipe into the pipe along the central axis thereof and then injecting a colored solution into the water, the colored solution flows in the form of a single line while the flow velocity of the water is small or slow. Thus, the water flows straightly and in parallel to the wall of the pipe. However, when the flow velocity is raised to reach a given flow velocity, turbulence is suddenly caused in the water flow. Consequently, the colored solution is mixed with the water flow so that the whole of the solution and water becomes a colored flow. The former flow is called laminar flow, and the latter flow is called turbulent flow.

Whether a flow turns to a laminar flow or turbulent flow depends on whether or not the Reynolds number, which is a dimensionless number showing the state of the flow, is not more than a given critical value. As the Reynolds number is smaller, a laminar flow is more apt to be caused. The Reynolds number Re of the flow in a pipe is represented by the following equation:

$$Re = D\langle v_x \rangle \rho/\mu$$

wherein D represents the equivalent diameter of the pipe, $\langle v_x \rangle$ represents the sectional average velocity, $\rho$ represents the density of the flow, and $\mu$ represents the viscosity of the flow. As can be understood from this equation, the Reynolds number is smaller as the equivalent diameter is smaller. Therefore, in the case that the equivalent diameter is in the order of μm, a stable laminar flow is apt to be formed. In addition, the physical properties of the solution, such as the density and the viscosity thereof, also have influence on the Reynolds number. As the density is smaller and/or the viscosity is larger, the Reynolds number is smaller. It can be, therefore, understood that a laminar flow is apt to be formed in that case.

The Reynolds number representing such a critical value is called "critical Reynolds number". The critical Reynolds number is not necessarily definite. However, roughly, the following values can be criteria:

| | |
|---|---|
| $Re<2,300$ | laminar flow; |
| $Re>3,000$ | turbulent flow; and |
| $3,000\geq Re\geq 2,300$ | transition state. |

As the equivalent diameter of a channel is smaller, the surface area per unit volume (specific surface area) thereof is larger. When the channel turns into a micro-scale, the specific surface area becomes remarkably large so that the conduction efficiency of heat through the wall of the channel becomes very high. Since the heat conduction time (t) of a fluid flowing in the channel is represented by: $t=d_{eq}^2/\alpha$ (in which $\alpha$ is the heat diffusion rate of the fluid), the heat conduction time becomes shorter as the equivalent diameter becomes smaller. That is, if the equivalent diameter becomes 1/10, the heat conduction time becomes 1/100. Thus, when the equivalent diameter is in a micro-scale, the heat conduction speed is very high.

Precisely, in a micro-size space where the equivalent diameter is in micro-scale, flow has a small Reynolds number, and thus, a flow reaction can be conducted with the stable laminar flow being preferential. In addition, the interface between laminar flows has a very large interface surface area. This enables high-speed and precise mixing of component molecules owing to molecular diffusion between laminar flows, with keeping laminar flows. Further, use can be made of a channel wall having a large surface area, which enables precise temperature control; and controlling the flow rate in flow reaction enables precise control of reaction time. Therefore, among the channels where the laminar flow can be formed according to the present invention, a channel of micro scale that has an equivalent diameter with which the reaction can be highly controlled is defined as a micro reaction site.

As shown in the above explanation of Reynolds number, formation of laminar flow is largely influenced not only by the size of equivalent diameter of the channel but also by flowing conditions that include solution physical properties such as viscosity and density. Therefore, in the present invention, the equivalent diameter of the channel is not particularly limited as long as a laminar flow is formed in the channel, but the equivalent diameter is preferably of a size with which a laminar flow easily forms. The equivalent diameter of the channel is preferably 10 mm or less, and it is more preferably 1 mm or less since a micro reaction site can be formed. The equivalent diameter is further preferably 10 μm to 1 mm, and particularly preferably 20 to 300 μm.

A typical example of the reaction apparatus having such a micro-scale size flow path (channel) is commonly called "microreactor" and is being developed greatly in recent years (see, for example, W. Ehrfeld, V. Hessel, and H.

Loewe, "Microreactor," 1 Ed. (2000) Wiley-VCH).

The above-mentioned general micro-reactor is provided with plural micro-channels each having an equivalent diameter (obtained by converting the section thereof to a corresponding circle) of several micrometers to several hundred micrometers; and a mixing space connected to these micro-channels. In the micro-reactor, plural solutions are introduced through the plural micro-channels into the mixing space, thereby mixing the solutions, or mixing the solutions and simultaneously causing chemical reaction.

Next, the following describes major different points of reaction by use of the micro-reactor from reaction based on a batch type by use of a tank or the like. In chemical reaction of a liquid phase and chemical reaction in two liquid phases, molecules generally encounter each other on the interface between the reaction solutions, to cause the reaction. Therefore, when the reaction is conducted in a microscopic space (micro-channel), the area of the interface becomes large in relation to the space so that the efficiency of the reaction increases remarkably. In addition, about the diffusion of molecules, the diffusion time is in proportion with the square of diffusion distance. This fact means that as the scale is made smaller, the mixing of the reaction solutions advances more by the diffusion of the molecules, so as to cause the reaction more easily even if the reaction solutions are not actively mixed. Further, in the microscopic space, since flows have small Reynolds numbers (dimensionless number by which the flow is characterized), the flows tend to turn preferentially to laminar flows. Therefore, the molecules existent in the solutions are exchanged from one laminar flow to another laminar flow on the interface where the solutions are in the states of laminar flows, and the transferred molecules cause precipitation or reaction.

When a micro-reactor, which has characteristics as described above, is used, the temperature and reaction time between the solutions therein can be more precisely controlled, compared with a conventional batch system, in which, for example, a tank having a large volume is used as a reaction site. Further, in the batch system, in particular, between solutions having a large reaction speed, sometimes reaction advances on a reaction contact face generated at the initial stage of mixing the solutions, and further a primary product generated by the reaction between the solutions subsequently undergoes reaction in the container. Therefore, there is a possibility that the resultant product becomes non-homogeneous or crystals of the product grow beyond necessity in the mixing container (batch) to get coarse. Contrary to the above, according to a micro-reactor solutions hardly remain in the mixing space (e.g. a mixing container) so as to flow continuously. Consequently, it is possible to restrain a primary product generated by the reaction between the solutions from undergoing subsequent reaction while the primary product remains in the mixing space. Thus, a pure primary product, which has been hardly taken out hitherto, can be taken out. Moreover, it becomes difficult that crystals aggregate in the mixing space or get coarse.

Further, when a chemical substance that can be produced in only a small amount by use of an experimental producing-apparatus, is tried to produce in a large amount by use of large-scale manufacturing facilities (i.e. scaling up), huge labor and very long period of time have been required hitherto, to gain the reproducibility of the manufacture in large-scale manufacturing facilities of a batch system as similar as the reproducibility of the production in the experimental producing-apparatus. However, by arranging a plurality of producing lines each using a micro-reactor in parallel (numbering-up) according to a necessary production quantity, labor and time period for gaining such the reproducibility may be largely reduced.

Hereinafter preferable examples of the method for forming the channel that can be used in a method of producing an organic pigment particle dispersion of the present invention will be explained, but the present invention is not limited by the explanation. It is relatively easy to form a channel with an equivalent diameter of 1 mm or more with generally known machine processing techniques, but it is exceptionally difficult to form a channel with a size of 1 mm or less (micro size), especially with a size of 500 μm or less. A micro-size channel (micro-channel) is formed on a solid substrate by micro processing technique in many cases. The material of the substrate may be any stable material that is not apt to be corroded. Examples of the material include metal (e.g. stainless steel, hastelloy (Ni-Fe based alloy), nickel, aluminum, silver, gold, platinum, tantalum, and titanium), glass, plastics, silicone, Teflon (registered trademark), and ceramics.

Representative examples of the micro processing technique for producing the micro-channel include a LIGA (Roentgen-Lithographie Galvanik Abformung) method using X-ray lithography, a high aspect ratio photolithography method using EPON SU-8 (trade name), a micro discharge processing method (μ-EDM (Micro Electro Discharge Machining)), a high aspect ratio processing method for silicon by Deep RIE (Reactive Ion Etching), a hot emboss processing method, a photo-fabrication method, a laser processing method, an ion beam processing method, and a mechanical micro cutting processing method using a micro tool made of such a hard material as diamond. These techniques may be used alone or in combination. Preferable micro processing techniques are the LIGA method using X-ray lithography, the high-aspect ratio photolithography method using EPON SU-8, the micro discharge processing method (μ-EDM), and the mechanical micro cutting processing method. In recent years, investigations have been made for applying a micro-injection molding technique to engineering plastics.

When the micro channel is assembled, a joining technique is often used. A normal joining technique is roughly divided into solid-phase joining and liquid-phase joining. In joining methods generally used, a typical joining method includes pressure welding and diffusion bonding as the solid-phase joining; and welding, eutectic bonding, soldering,

and gluing as the liquid joining. Further, at the time of assembling, it is desirable to use a highly precise joining method in which dimension accuracy is maintained in such a way that deterioration of material due to high temperature heating, or destruction of a micro-structure such as a flow passage by a large deformation of material does not take place. Such a technique includes a silicon direct joining, anode joining, surface activation joining, direct joining using hydrogen bond, joining using aqueous HF solution, Au-Si eutectic bonding, and void-free bonding.

The micro-channels that can be used in the producing method of the present invention are not limited to channels formed on a solid substrate by use of the micro processing technique, and may be, for example, various available fused silica capillary tubes each having an inner diameter of several micrometers to several hundred micrometers. Various silicon tubes, fluorine-containing resin tubes, stainless steel pipes, and PEEK (polyetheretherketone) pipes each having an inner diameter of several micrometers to several hundred micrometers, which are commercially available as parts for high-performance liquid chromatography or gas chromatography, can also be used.

Hitherto, with respect to micro-reactors, devices that are aimed to improve reaction efficiency and the like, have been reported. For example, JP-A-2003-210960, JP-A-2003-210963, JP-A-2003-210959, JP-A-2005-46650, JP-A-2005-46651, JP-A-2005-46652, and JP-A-2005-288254 are concerned with micro-mixers and micro-reactors. In the present invention, these micro-devices may also be used.

The micro-channel that can be used in the present invention may be subjected to a surface treatment. In particular, when handling an aqueous solution, since the adsorption of a sample to glass or silicon may become a problem, the surface treatment is important. In the fluid control in the micro-sized flow passage, it is desirable to realize this without incorporating a movable part requiring a complicated manufacturing process. For example, when a hydrophilic region and a hydrophobic region are prepared in the channel by the surface treatment, it becomes possible to treat a fluid by using a difference in surface tension exerting on the boundary between these regions. The method used for surface-treating glass or silicon in many cases may be hydrophobic or hydrophilic surface-treatment by using a silane coupling agent.

In order to introduce a reagent, sample, or the like into the channels and mix, a fluid control function may be needed. Specifically, since the behavior of the fluid in the micro channel has properties different from those in a macro-scale, a control method appropriate for the micro-scale should preferably be considered. A fluid control method is classified into a continuous flow system and a droplet (liquid plug) system according to the formation, while it is also classified into an electric driving system and a pressure driving system according to the driving force.

A more detailed description of these systems will be given hereinafter. The most widely used system as a formation for treating a fluid is the continuous flow system. When the flow is controlled in the continuous flow system, generally, the entire portion inside the micro-channel is filled with a fluid, and the fluid as a whole is driven by a pressure source such as a syringe pump that is provided outside the channel. In this method, although there is such a difficulty that dead volume is large, and the like, the continuous flow system has such a great merit that the control system can be realized with a relatively simple set-up.

As a system which is different from the continuous flow system, there is provided the droplet (liquid plug) system. In this system, droplets partitioned by air are made to move inside the reactor or inside the channel leading to the reactor, and each of the droplets is driven by air pressure. During this process, a vent structure for allowing air between droplets and channel walls or air between the droplets to escape to the outside, if necessary; a valve structure for maintaining pressure inside the branched channels independently from pressure at other portions; and the like, must be provided inside the reactor system. Further, a pressure control system comprising a pressure source or a switching valve must be provided outside the reactor system in order to move the droplets by controlling the pressure difference. Thus, in the droplet system, although the apparatus configuration and the structure of the reactor become rather complicated as stated above, a multi-stage operation is enabled, for example, plural droplets are individually operated and some reactions are sequentially performed, and the degree of freedom concerning the system configuration becomes high.

As the driving system for performing the fluid control, there are generally and widely used an electrical driving method in which a high voltage is applied between both ends of a flow passage (channel) to generate an electro-osmotic flow, thereby fluid is moved; and a pressure driving method in which a pressure is applied to a fluid from the outside of the passage using a pressure source to move the fluid. It has been known that both systems are different in that, for example, as the behavior of the fluid, the flow velocity profile in the cross-section of the flow passage becomes a flat distribution in the case of the electrical driving system, whereas it becomes a hyperbolic flow distribution in the pressure driving system, in which the flow velocity is high at the center of the flow passage and low at the wall surface part. Therefore, the electrical driving system is suitable for such an object that a movement is made while the shape of a sample plug or the like is kept. In the case where the electrical driving system is performed, since it is necessary that the inside of the flow passage is filled with the fluid, the form of the continuous flow system must be adopted. However, since the fluid can be treated by an electrical control, a comparatively complicated process is also realized, for example, a concentration gradient varying with time is formed by continuously changing the mixing ratio of two kinds of solutions. In the case of the pressure driving system, the control can be made irrespective of electrical properties of the fluid, and

secondary effects such as heat generation or electrolysis may not be considered, and therefore, an influence on the substrate (component) hardly exists, and its application range is wide. On the contrary, a pressure source must be prepared outside, and for example, response characteristics to manipulation are changed according to the magnitude of a dead volume of a pressure system, and it is necessary to automate the complicated process.

Although a method to be used as a fluid control method can suitably be selected, the pressure driving system of the continuous flow system is preferable.

The temperature control in the channel may be performed by putting the whole device having a passage in a container in which the temperature is controlled; or forming a heater structure such as a metal resistance wire or polysilicon in the device, and performing a thermal cycle in such a manner that the heater structure is used when heating, and cooling is natural cooling. With respect to the sensing of temperature, when a metal resistance wire is used, it is preferable that the same resistance wire as the heater is additionally formed, and the temperature detection is performed on the basis of the change of the resistance value of the additional wire. When the polysilicon is used, it is preferable that a thermocouple is used to detect the temperature. Further, heating and cooling may be performed from the outside by bringing a Peltier element into contact with the channel. A suitable method can be selected in accordance with the use, the material of the channel body, and the like.

In the case of precipitating fine particles in the course of flowing through a channel, the reaction time can be controlled by a time during which they remain in the channel. When the equivalent diameter is constant, the retention time can be determined by the length of the channel and the induction speeds of the reaction solutions. Further, the length of the channel is not particularly limited, but it is preferably 1 mm or more but 10 m or less, more preferably 5 mm or more but 10 m or less.

In a method of the present invention, the number of channels may be any number appropriately provided with a reactor. The number of channels may be one. Alternately, many channels may be used in parallel (i.e. numbering-up) as needed, to increase a processing amount thereof.

Preferred examples of a reactor that can be used in the method of the present invention are illustrated in Figs. 1-1 to 8. Needless to say, the present invention is not limited to these examples.

Fig. 1-1 is an explanatory view of one embodiment of a reactor 10 having a Y-shaped channel. Fig. 1-2 is a sectional view taken on I-I line of Fig. 1-1. The shape of the section perpendicular to the direction of the length of the channel is varied dependently on the micro processing technique to be used, and is preferably a shape close to a trapezoid or a rectangle. Further, it is preferable that width C and depth H are made into micrometer-sizes. Solutions introduced from introducing ports 11 and 12 with pumps or the like are caused to flow via introducing channels 13a or 13b, respectively, and are brought into contact with each other at a fluid confluence points 13d to preferably form stable laminar flows to flow through a reaction channel 13c. While the solutions flow as the laminar flows, a solute contained in a laminar flow is mixed or reacted with another solute contained in another laminar flow each other by molecular diffusion on the interface between the laminar flows. Solutes, which diffuse very slowly, may not be diffused or mixed between the laminar flows; and, in some cases, the solutes are not mixed until they reach a discharge port 14. In such a case that the two solutions to be introduced are easily mixed in a flask, the flow of the mixed solutions may become homogeneous flow in the discharge port if a channel length F is made long. However, when the channel length F is short, laminar flows are kept up to the discharge port. When the two solutions to be introduced are not mixed in a flask and are separated into phases, the two solutions naturally flow as laminar flows to reach the discharge port 14.

Fig. 2-1 is an explanatory view of one embodiment of a reactor 20 having a cylindrical pipe-type channel in which a channel is inserted at one side thereof. Fig. 2-2 is a sectional view of the reactor taken on line IIa-IIa of Fig. 2-1, and Fig. 2-3 is a sectional view of the reactor taken on line IIb-IIb of Fig. 2-1. The shape of the section perpendicular to the direction of the length of the channel is preferably a circular shape or a shape close thereto. In this case, it is preferable that the channel diameters (D and E) of the cylindrical pipes are micrometer-sizes. Solutions introduced from introducing ports 21 and 22 with pumps or the like are caused to flow via introducing channels 23b or 23a, respectively, and are brought into contact with each other at a fluid confluence point 23d to preferably form stable cylindrical laminar flows to flow through a reaction channel 23c. While the solutions flow as the cylindrical laminar flows, solutes contained in the separate laminar flows are mixed or reacted with each other by molecular diffusion on the interface between the laminar flows. This matter is the same as in the case of the reactor, as illustrated in Fig. 1-1. The apparatus having the cylindrical pipe-type channel has the following characteristics: that the apparatus can make the contact interface between the two solutions larger than the apparatus illustrated in Fig. 1-1; and since the contact interface has no portion to contact the wall face of the apparatus, it does not happen that crystal growth is caused from the contact portion with the wall face as in the case that a solid (crystal) is generated by reaction, thereby the apparatus gives only a low possibility that the channel is clogged.

Figs. 3-1 and 4 illustrate apparatuses obtained by improving the apparatuses illustrated in Figs. 1-1 and 2-1, respectively, in order that when flows of two solutions arrive at outlets in the state that the flows are laminar flows, the laminar flows can be separated. When these apparatuses are used, reaction and separation can be attained at the same time. It is also possible to avoid phenomena that the two solutions are finally mixed so that the reaction between the

solutions advances excessively, and that generated crystals get coarse. In the case that products or crystals are selectively present in one of the solutions, the products or crystals can be obtained with a higher concentration than in the case that the two solutions are mixed. Further, by linking a plurality of the apparatuses to each other, there are such advantages that an extracting operation is effectively performed.

A micro-reactor 50 shown in Fig. 5 is configured in such a manner that two divided supply flow paths 51 A, 51 B that are divided from one supply flow path 51 for supplying a solution A so as to divide the solution A into two, one supply flow path 52 for supplying a solution B, which is not divided, and a micro-flow path 53 for effecting a reaction between the solutions A and B are communicated with each other in one junction region 54. (In Figs. 5 to 8, an arrow shows the flow direction of a solution A, B, or C.) Further, the divided supply flow paths 51 A, 51 B, the supply flow path 52, and the micro-flow path 53 are placed with an equal interval at 90° around the junction region 54 substantially in an identical plane. More specifically, center axes (alternate long and short dash lines) of the respective flow paths 51A, 51B, 52, and 53 cross each other in a cross shape (cross angle $\alpha$ = 90°) in the junction region 54. In Fig. 5, although only the supply flow path 51 of the solution A is divided so as to allow to make its supply amount to be larger than that of the solution B, the supply flow path 52 of the solution B may also be divided into a plurality of paths. Further, the cross angle $\alpha$ of the respective flow paths 51 A, 51 B, 52, and 53 placed around the junction region 54 is not limited to 90°, and can be set appropriately. Further, the number of division of the supply flow paths 51, 52 is not particularly limited. However, when the number of division is too large, the configuration of the micro-reactor 50 becomes complicated. Therefore, the number of division is preferably 2 to 10, and more preferably 2 to 5.

Fig 6 is an explanatory view illustrating another embodiment of the plane-type microreactor. In a microreactor 60, a cross angle $\beta$ formed by center axes of divided supply flow paths 61 A, 61 B with respect to a center axis of a supply flow path 62 is smaller than 90° of Fig. 5 and is 45°. Further, the microreactor 60 is configured so that a cross angle $\alpha$ formed by a center axis of a micro-flow path 63 with respect to the center axes of the divided supply flow paths 61A, 61B is 135°.

Fig. 7 is an explanatory view illustrating still another embodiment of the plane-type microreactor. In a microreactor 70, a cross angle $\beta$ formed by center axes of divided supply flow paths 71 A, 71 B through which the solution A flows with respect to a center axis of the supply flow path 72 through which a solution B flows is larger than 90° of Fig. 5 and is 135°. Further, the microreactor 70 is configured so that a cross angle $\alpha$ formed by a center axis of a micro-flow path 73 with respect to the center axes of the divided supply flow paths 71A, 71B becomes 45°. The cross angles $\alpha$, $\beta$ of the supply flow path 72, the divided supply flow paths 71A, 71B, and the micro-flow path 73 can be set appropriately. However, assuming that the sum of cross-sections in a thickness direction of the joined solutions B and A is S1, and the cross-section in a diameter direction of the micro-flow path 73 is S2, it is preferable to set the cross angles $\alpha$, $\beta$ so as to satisfy S 1 > S2. This can further increase the contact area between the solutions A, B, and further decrease the diffusion/mixing distance thereof, so that the mixing becomes likely to occur more instantaneously.

Fig. 8 is an exploded perspective view showing an embodiment of a three-dimensional microreactor under the condition that three parts constituting the microreactor 80 are decomposed. The three-dimensional microreactor 80 is mainly composed of a supply block 81, a junction block 82, and a reaction block 83, each having a cylindrical shape. For assembling the microreactor 80, the side faces of the blocks 81, 82, 83 having a cylindrical shape are attached to each other in this order to form a cylinder, and in this state, the respective blocks 81, 82, 83 are fastened integrally with a boltnut, etc.

On a side face 84 of the supply block 81 opposed to the junction block 82, two annular grooves 86, 85 are formed concentrically, and in the assembled state of the microreactor 80, two annular grooves 86, 85 form ring-shaped flow paths through which the solutions B and A flow respectively. Then, through-holes 88, 87 are respectively formed so as to reach the outside annular groove 86 and the inside annular groove 85 from a side face 94 of the supply block 81 not opposed to the junction block 82. Among two through-holes 88, 87, supply means (a pump, a connecting tube, etc.) for supplying the solution A is connected to the through-hole 88 communicated with the outside annular groove 86, and supply means (a pump, a connecting tube, etc.) for supplying the solution B is connected to the through-hole 87 communicated with the inside annular groove 85. In Fig. 8, although the solution A is allowed to flow through the outside annular groove 86, and the solution B is allowed to flow through the inside annular groove 85, they may be opposite.

At a center of a side face 89 of the junction block 82 opposed to the reaction block 83, a circular junction hole 90 is formed, and four long radial grooves 91 and four short radial grooves 92 are formed alternately in a radial manner from the junction hole 90. In the assembled state of the microreactor 80, the junction hole 90 and the radial grooves 91, 92 form a circular space to be a junction region 90 and radial flow paths through which the solutions A, B flow. Further, through-holes 95, are respectively formed in a thickness direction of the junction block 82 from the tip ends of the long radial grooves 91 among eight radial grooves 91, 92, and these through-holes 95 are communicated with the above-mentioned outside annular groove 86 formed in the supply block 81. Similarly, through-holes 96, are respective formed in a thickness direction of the junction block 82 from the tip ends of the short radial grooves 92, and the through-holes 96 are communicated with the inside annular groove 85 formed in the supply block 81.

Further, at a center of the reaction block 83, one through-hole 93 communicated with the junction hole 90 is

formed in a thickness direction of the reaction block 83, and the through-hole 93 becomes a micro-flow path.

Because of this, the solution A flows through a supply flow path composed of the through-hole 88 of the supply block 81, the outside annular groove 86, the through-holes 95 of the junction block 82, and the long radial grooves 91, and divided into four divided flows to reach the junction region 90. On the other hand, the solution B flows through a supply flow path composed of the through-hole 87 of the supply block 81, the inside annular groove 85, the through-holes 96 of the junction block 82, and the short radial grooves 92, and divided into four divided flows to reach the junction region 90. In the junction region 90, the divided flow of the solution A and the divided flow of the solution B are joined with having the respective kinetic energy, and thereafter, flows in the micro-flow path 93 with the flow direction changed by 90°.

Numerals in Figs. 1 to 8 are explained below.

10, 20, 30, and 40 represent a body of reactor; 11, 12, 21, 22, 3I, 32, 41, and 42 represent an introducing port; 13 and 33 represent a channel; 13a, 13b, 23a, 23b, 33a, 33b, 43a, and 43b represent an introducing channel; 13c, 23c, 33c, and 43c represent a reaction channel; 13d, 23d, 33d, and 43d represent a fluid confluence point; 33e and 43e represent a fluid dividing point; 33f, 33g, 43f, and 43g represent a discharge channel; 14, 24, 34, 35, 44, and 45 represent a discharge port; 50, 60, 70, and 80 represent a micro-reactor; 51, 52, 61, 62, 71, and 72 represent a supply flow path for a solution; 51A, 61A, and 71A represent a divided supply flow path; 53, 63, and 73 represent a micro-flow path; 54, 64, and 74 represent a junction region; 81 represents a supply block; 82 represents a junction block; 83 represents a reaction block; 86 represents an outside annular groove; 85 represents an inside annular groove; 87 and 88 represent a through-hole of a supply block; 90 represents a junction hole (a junction region); 91 represents a long radial groove; 92 represents a short radial groove; 95 and 96 represent a through-hole of a junction block; and 93 represents a through-hole of a reaction block (micro-flow path).

In the method of producing an organic pigment fine particle dispersion of the present invention, at least one of an organic pigment solution and an aqueous medium contains a polymerizable compound represented by formula (1), and then the both solutions are mixed, and in the course of the mixing, the pigment are allowed to form as fine particles, followed by polymerizing the polymerizable compound.

An organic pigment that can be used in the producing method of the present invention is not limited in the color tone thereof, and it may be a magenta pigment, a yellow pigment, or a cyan pigment. Specifically, the organic pigment may be a magenta pigment, a yellow pigment or a cyan pigment of a perylene, perynone, quinacridone, quinacridonequinone, anthraquinone, anthanthrone, benzimidazolone, condensed disazo, disazo, azo, indanthrone, phthalocyanine, triaryl carbonium, dioxazine, aminoanthraquinone, diketopyrrolopyrrole, thioindigo, isoindoline, isoindolinone, pyranthrone or isoviolanthrone-compound pigment, or a mixture thereof.

More specifically, examples of the organic pigment include perylene-compound pigments, such as C.I. Pigment Red 190 (C.I. No. 71140), C.I. Pigment Red 224 (C.I. No. 71127), and C.I. Pigment Violet 29 (C.I. No. 71129); perynone-compound pigments, such as C.I. Pigment Orange 43 (C.I. No. 71105), and C.I. Pigment Red 194 (C.I. No. 71100); quinacridone-compound pigments, such as C.I. Pigment Violet 19 (C.I. No. 73900), C.I. Pigment Violet 42, C.I. Pigment Red 122 (C.I. No. 73915), C.I. Pigment Red 192, C.I. Pigment Red 202 (C.I. No. 73907), C.I. Pigment Red 207 (C.I. Nos. 73900 and 73906), and C.I. Pigment Red 209 (C.I. No. 73905); quinacridonequinone-compound pigments, such as C.I. Pigment Red 206 (C.I. No. 73900/73920), C.I. Pigment Orange 48 (C.I. No. 73900/73920), and C.I. Pigment Orange 49 (C.I. No. 73900/73920); anthraquinone-compound pigments, such as C.I. Pigment Yellow 147 (C.I. No. 60645); anthanthrone-compound pigments, such as C.I. Pigment Red 168 (C.I. No. 59300); benzimidazolone-compound pigments, such as C.I. Pigment Brown 25 (C.I. No. 12510), C.I. Pigment Violet 32 (C.I. No. 12517), C.I. Pigment Yellow 180 (C.I. No. 21290), C.I. Pigment Yellow 181 (C.I. No. 11777), C.I. Pigment Orange 62 (C.I. No. 11775), and C.I. Pigment Red 185 (C.I. No. 12516); condensed disazo-compound pigments, such as C.I. Pigment Yellow 93 (C.I. No. 20710), C.I. Pigment Yellow 94 (C.I. No. 20038), C.I. Pigment Yellow 95 (C.I. No. 20034), C.I. Pigment Yellow 128 (C.I. No. 20037), C.I. Pigment Yellow 166 (C.I. No. 20035), C.I. Pigment Orange 34 (C.I. No. 21115), C.I. Pigment Orange 13 (C.I. No. 21110), C.I. Pigment Orange 31 (C.I. No. 20050), C.I. Pigment Red 144 (C.I. No. 20735), C.I. Pigment Red 166 (C.I. No. 20730), C.I. Pigment Red 220 (C.I. No. 20055), C.I. Pigment Red 221 (C.I. No. 20065), C.I. Pigment Red 242 (C.I. No. 20067), C.I. Pigment Red 248, C.I. Pigment Red 262, and C.I. Pigment Brown 23 (C.I. No. 20060); disazo-compound pigments, such as C.I. Pigment Yellow 13 (C.I. No. 21100), C.I. Pigment Yellow 83 (C.I. No. 21108), and C.I. Pigment Yellow 188 (C.I. No. 21094); azo-compound pigments, such as C.I. Pigment Red 187 (C.I. No. 12486), C.I. Pigment Red 170 (C.I. No. 12475), C.I. Pigment Yellow 74 (C.I. No. 11714), C.I. Pigment Red 48 (C.I. No. 15865), C.I. Pigment Red 53 (C.I. No. 15585), C.I. Pigment Orange 64 (C.I. No. 12760), and C.I. Pigment Red 247 (C.I. No. 15915); indanthrone-compound pigments, such as C.I. Pigment Blue 60 (C.I. No. 69800); phthalocyanine-compound pigments, such as C.I. Pigment Green 7 (C.I. No. 74260), C.I. Pigment Green 36 (C.I. No. 74265), Pigment Green 37 (C.I. No. 74255), Pigment Blue 16 (C.I. No. 74100), C.I. Pigment Blue 75 (C.I. No. 74160:2), and 15 (C.I. No. 74160); triaryl carbonium-compound pigments, such as C.I. Pigment Blue 56 (C.I. No. 42800), and C.I. Pigment Blue 61 (C.I. No. 42765: 1); dioxazine-compound pigments, such as C.I. Pigment Violet 23 (C.I. No. 51319), and C.I. Pigment Violet 37 (C.I. No. 51345); aminoanthraquinone-compound pigments, such as C.I. Pigment Red 177 (C.I. No. 65300); diketopyrrolopyrrole-compound pigments, such as C.I. Pigment Red 254 (C.I. No. 56110), C.I. Pigment Red 255 (C.I. No. 561050), C.I. Pigment Red 264, C.I. Pigment Red 272 (C.I. No. 561150), C.I. Pigment Orange 71, and C.I. Pigment Orange 73; thioindigo-compound pigments, such as C.I. Pigment Red 88 (C.I. No. 73312); isoindoline-compound pigments, such as C.I. Pigment Yellow 139 (C.I. No. 56298), C.I. Pigment Orange 66 (C.I. No. 48210); isoindolinone-compound pigments, such as C.I. Pigment Yellow 109 (C.I. No. 56284), and C.I. Pigment Orange 61 (C.I. No. 11295); pyranthrone-compound pigments, such as C.I. Pigment Orange 40 (C.I. No. 59700), and C.I. Pigment Red 216 (C.I. No. 59710); and isoviolanthrone-compound pigments, such as C.I. Pigment Violet 31 (C.I. No. 60010).

Preferred pigments are quinacridone-, diketopyrrolopyrrole-, condensed disazo-, or phthalocyanine- compound pigments; and particularly preferred pigments are quinacridone-, condensed disazo-, or phthalocyanine- compound pigments.

One kind or at least two kinds of organic pigment may be used in the producing method of the present invention, and further, a solid solution or a combination of an organic pigment and an inorganic pigment may be used.

The organic pigment solution used in the producing method of the present invention is preferably obtained by uniformly dissolving an organic pigment, and the method thereof is not particularly limited. An organic pigment may be dissolved as an alkaline or acidic solution. It depends on the nature of the pigment whether the organic pigment in interest may be more easily dissolved homogeneously under either alkaline or acidic, to select the conditions in which the organic pigment be dissolved under alkaline or dissolved under acidic. In general, in the case of the pigment having in the molecule thereof a group dissociative under alkaline, the alkaline medium is used, and in the case of the pigment having no group dissociative under alkaline and having in the molecule thereof many nitrogen atoms, to which protons easily adhere, the acidic medium is used. For example, quinacridone-, diketopyrrolopyrrole-, and condensed disazo-compound pigments can be dissolved in the alkaline medium more homogenously, and a phthalocyanine-compound pigment can be dissolved in the acidic medium more homogenously.

Examples of a base that can be used in the case that the pigment is dissolved in alkaline medium, include inorganic bases, such as sodium hydroxide, potassium hydroxide, calcium hydroxide, and barium hydroxide; and organic bases, such as trialkylamine, diazabicycloundecene (DBU), and metal alkoxides ($NaOCH_3$, $KOC_2H_5$).

The amount of the base to be used is not particularly limited, as long as the base in the amount can make the pigment be dissolved homogeneously. In the case of the inorganic base, the amount thereof is preferably from 1.0 to 30 mole equivalents, more preferably from 2.0 to 25 mole equivalents, and further preferably from 3.0 to 20 mole equivalents, to the pigment. In the case of the organic base, the amount thereof is preferably from 1.0 to 100 mole equivalents, more preferably from 5.0 to 100 mole equivalents, and further preferably from 20 to 100 mole equivalents, to the pigment.

Examples of an acid to be used in the case that the pigment is dissolved in the acidic medium, include inorganic acids, such as sulfuric acid, hydrochloric acid, and phosphoric acid; and organic acids, such as acetic acid, trifluoroacetic acid, oxalic acid, methanesulfonic acid, and trifluoromethanesulfonic acid. Among these, the inorganic acids are preferable, and sulfuric acid is especially preferable.

The amount of the acid to be used is not particularly limited, as long as the acid in the amount can make the pigment be dissolved homogeneously. In many cases, the acid is used in a larger or more excessive amount than the base. Regardless the kind of the acid being an inorganic acid or an organic acid, the amount of the acid to be used is preferably from 3 to 500 mole equivalents, more preferably from 10 to 500 mole equivalents, and further preferably from 30 to 200 mole equivalents, to the pigment.

The solvent to be used in for preparing the organic pigment solution is preferably an amide-compound solvent or a sulfur-containing compound solvent in the case of alkaline, and a carboxylic acid-compound solvent, a sulfur-containing compound solvent or a sulfonic acid-compound solvent in the case of acidic; more preferably the sulfur-containing-compound solvent in the case of alkaline, and a sulfonic acid-compound solvent in the case of acidic; and particularly preferably dimethylsulfoxide (DMSO) in the case of alkaline, and methanesulfonic acid in the case of the acidic.

Next, the aqueous medium will be described. In the present invention, the "aqueous medium" refers to water alone, an aqueous solution of inorganic compound (e.g., hydrochloric acid, and sodium hydroxide solution), a mixed solvent of water and an organic solvent soluble in water, or the combination thereof. The organic solvent soluble in water is preferably used, for example, (i) in the case where only water is not sufficient for uniformly dissolving a pigment and a dispersant, (ii) the case where only water is not sufficient for obtaining viscosity required for the flow through a flow path, (iii) the case where the organic solvent is required for forming a laminar flow, and the like.

Examples of the organic solvent to be added in the aqueous medium include polyhydric alcohol-compound solvents, typified, for example, by ethylene glycol, propylene glycol, diethylene glycol, polyethylene glycol, thiodiglycol, dithiodiglycol, 2-methyl-1,3-propanediol, 1,2,6-hexanetriol, acetylene glycol derivatives, glycerin, and trimethylolpropane; lower monoalkyl ether-compound solvents of a polyhydric alcohol, such as ethylene glycol monomethyl (or ethyl) ether, diethylene glycol monomethyl (or ethyl) ether, and triethylene glycol monoethyl (or butyl) ether; polyether-compound solvents, such as ethylene glycol dimethyl ether (monoglyme), diethylene glycol dimethyl ether (diglyme), and triehtylene glycol dimethyl ether (triglyme); amide-compound solvents, such as dimethylformamide, dimethylacetamide, 2-pyrrolidone, N-methyl-2-pyrrolidone, 1,3-dimethyl-2-imidazolidinone, urea, and tetramethyl urea; sulfur-containing-compound solvents, such as sulfolane, dimethylsulfoxide, and 3-sulfolene; polyfunctional compound solvents, such as diacetone alcohol, and diethanolamine; carboxylic acid-compound solvents, such as acetic acid, maleic acid, docosahexaenoic acid, trichloroacetic acid, and trifluoroacetic acid; and sulfonic acid-compound solvents, such as methanesulfonic acid, and trifluorosulfonic acid. These solvents may be mixed in combination with two or more thereof, and used.

The blend ratio of the organic solvent to the aqueous medium is not particularly limited, as long as at the ratio it is possible to dissolve the pigment to be used homogeneously. The blend ratio of water to the organic solvent (water/organic solvent) is preferably from 0.05 to 10 (mass ratio) in the case that the aqueous medium is alkaline. In the case that an inorganic acid is used in the acidic aqueous medium, it is preferable to use, for example, sulfuric acid alone without using any organic solvent. When an organic acid(s) is used, the organic acid itself is an organic solvent. Thus, in order to adjust the viscosity and the solubility of the aqueous medium, a plurality of acids may be mixed or water may be added thereto. Preferably, the mass ratio of water to the organic solvent(s) (organic acid(s)) is from 0.005 to 0.1 (mass ratio).

In a method of producing an organic pigment fine particle dispersion of the present invention, it is preferable that, in the case of mixing an organic pigment solution and an aqueous medium with a channel under the condition that they are in contact with each other, a uniformly dissolved solution is put in the flow path. When a suspension is introduced into the channel, the size of the particles therein may becomes large or pigment fine-particles having a wide particle size distribution may be generated. This results, as the case may be, to be apt to block the channel. In the present invention, the wording "homogeneously (or uniformly) dissolving" means a solution in which turbidity (muddiness) is hardly observed when the solution is observed under visible light. In the present invention, a solution obtained by filtration through a micro-filter having pores of 1 μm or less in diameter, or a solution which does not contain any substance remaining after the solution is filtrated through a filter having pores of 1 μm or less in diameter, is defined as a homogeneously (or uniformly) dissolved solution (or a homogeneous (or uniform) solution).

The following describes the hydrogen ion exponent (pH). The hydrogen ion exponent (pH) is the common logarithm of the reciprocal number of a hydrogen ion concentration (molar concentration), and may be called the hydrogen exponent. The hydrogen ion concentration is the concentration of hydrogen ion $H^+$ in a solution, and means the mole number of hydrogen ion present in a 1-liter solution. Since the hydrogen ion concentration changes in a very wide range, it is usually represented by the hydrogen ion exponent (pH). For example, pure water contains $10^{-7}$ mol of hydrogen ion at 1 atmosphere and 25°C. Thus, the pH thereof is 7, which is neutral. The aqueous solution having a pH of less than 7 is acidic, and the aqueous solution having a pH of more than 7 is alkaline. As a method of measuring the pH value, there are potentiometric and colorimetric measuring methods.

In the method of producing an organic pigment fine particle dispersion of the present invention, it is preferable that, in the case of mixing an organic pigment solution and an aqueous medium with a channel under the condition that they are in contact with each other, the hydrogen ion exponent (pH) is changed in the step of causing the solution to flow in a channel, thereby producing pigment fine particles. This process is preferably performed using a channel having an introducing port different from an introducing port for the homogeneous solution of the organic pigment, for example, a channel having at least two introducing ports as illustrated in Fig. 1-1 or 2-1. Specifically, a homogeneous solution of an organic pigment is introduced into the introducing port 11 in Fig. 1-1 or the introducing port 21 in Fig. 2-1, and an aqueous medium is introduced into the introducing port 12 in Fig. 1-1 or the introducing port 22 in Fig. 2-1. The two solutions can be brought into contact with each other in the channel 13c or 23c, thereby changing the hydrogen ion concentration, that is, the hydrogen ion exponent (pH), of the solution containing the organic pigment toward neutrality (pH 7). In the case that the equivalent diameter of the channel is in a micro-scale, any flow therein has a small Reynolds number. Consequently, in this case, stable laminar flows (cylindrical laminar flows in Fig. 2-1) are formed, and water and ions diffuse and transfer through a stable interface between the two flows so that the hydrogen ion exponent (pH) of the solution containing the organic pigment can be gradually changed toward neutrality. The pigment may not easily dissolved in an aqueous medium at a low alkalinity or a low acidity, therefore, as the hydrogen ion exponent (pH) of the solution containing the organic pigment is changed toward neutrality, pigment fine particles can be gradually precipitated.

In the case that pigment fine particles are produced from a pigment dissolved in an alkaline aqueous medium, the change of the hydrogen ion exponent (pH) is generally performed within the range of 16.0 to 5.0, preferably 16.0 to 10.0. In the case that pigment fine particles are produced from a pigment dissolved in an acidic aqueous medium, the change of the hydrogen ion exponent (pH) is generally performed within the range of 1.5 to 9.0, preferably 1.5 to 4.0. The range of the change depends on the value of the hydrogen ion exponent (pH) of the organic pigment solution, but the range may be a range sufficient for promoting the precipitation of the organic pigment.

When pigment fine particles are produced, the reaction temperature is preferably within such a range that the solvent is not solidified or vaporized, and it is preferably from -20 to 90°C, more preferably from 0 to 50°C, and particularly preferably from 5 to 15°C.

The flow velocity (flow rate) of the fluid which flows in the channel is preferably from 0.1 mL/hour to 300 L/hour, more preferably from 0.2 mL/hour to 30 L/hour, further preferably from 0.5 mL/hour to 15 L/hour, and particularly preferably

from 1.0 mL/hour to 6 L/hour.

In the present invention, the concentration of an organic pigment in an organic pigment solution is generally in the range of 0.5 to 20 mass%, and preferably in the range of 1.0 to 10 mass%.

In the method of producing an organic pigment fine particle dispersion of the present invention, a polymerizable compound represented by formula (1) is added in at least one of the organic pigment solution and the aqueous medium. Of these, it is preferable that the polymerizable compound represented by formula (1) is added in the organic pigment solution. The polymerizable compound has a hydrophilic function and a hydrophobic function separately in a molecule, thereby acting as a dispersing agent. Namely, the polymerizable compound has such a function that the compound rapidly adsorbs on a surface of the precipitated pigment particles, not only to form pigment fine particles, but also to prevent the thus-formed fine particles from re-aggregation. Further, the polymerizable compound has a reactive group containing a C=C bond, and thereby polymerizing the reactive group to fix and retain pigment fine particles in a polymer. As a result, the polymerizable compound having a function of dispersing agent is hardly eliminated, so that excellent dispersion stability can be achieved.

Formula ( 1 )

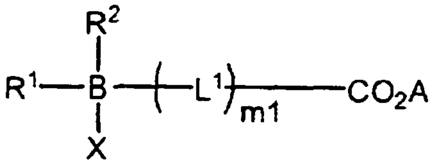

wherein, A represents a hydrogen atom, a typical metal atom, an ammonium group or an alkyl ammonium group; X represents a substituent having a C=C bond; B represents a carbon atom or an aromatic ring; $L^1$ represents a divalent linking group; ml represents 0 or an integer greater than 0; $R^1$ and $R^2$ each independently represent a hydrogen atom or a substituent, and at least one of $R^1$ and $R^2$ is a substituent having an alkyl group of 8 or more carbon atoms.

An addition amount of the compound represented by formula (1) can be properly selected depending on the structure of the compound, and the kind of components, such as a pigment and a solvent. However, the addition amount of the compound represented by formula (1) is preferably in a range of 0.1 to 1000 parts by mass, more preferably 1 to 500 parts by mass, and particularly preferably 10 to 250 parts by mass with respect to 100 parts by mass of the pigment.

In formula (1), A represents a hydrogen atom, a typical metal atom (e.g., lithium, sodium, or potassium atom), an ammonium group ($NH_4$) or an alkyl ammonium group such as a tetramethyl ammonium group. Among these, a hydrogen atom, a sodium atom, a potassium atom, or an ammonium group is preferable.

X represents a substituent having a C=C bond, and has a function to form a polymer by polymerization (including homopolymerization or copolymerization with another polymerizable compound) in the course of polymerization process. X preferably has at least one group selected from a vinyloxy group ($CH_2$=CH-O-), an allyloxy group ($CH_2$=CH-$CH_2$-O-), a styryl group (said group may embrace substituents having a C=C group on a benzene ring such as $CH_2$=CH-$C_6H_5$-), an acryloyl group ($CH_2$=CH-$CO_2$-), and a methacryloyl group ($CH_2$=$CCH_3$-$CO_2$-). It is particularly preferred to have an allyloxy group. In substituent X, it is preferred that each of these groups having a C=C bond is directly connected with B. That is, X is the substituent having a C=C bond (i.e. the aforementioned vinyloxy group or the like) per se. Alternatively, each of these groups is preferably connected with B through a linking group. As the linking group, a methylene group (-$CH_2$-), an ethylene group (-$CH_2CH_2$-), and a phenylene group (-$C_6H_4$-; the phenylene group may include those having any position such as o-, m-, and p-) are preferable.

In formula (1), $L^1$ represents a divalent linking group. Alternatively, $L^1$ may be a single bond so that $R^1R^2XC$ and $CO_2A$ can be directly connected with each other (in this case, ml is 0). $L^1$ is preferred to contain an ethyleneoxy unit (-$CH_2$-$CH_2$-O-) as a repeating unit. It is particularly preferred that $L^1$ has five or more ethyleneoxy units in terms of average value per molecule. $R^1$ and $R^2$ each independently represents a hydrogen atom or a substituent, and at least one of $R^1$ and $R^2$ is a substituent having an alkyl group of 8 or more carbon atoms (preferably from 8 to 20 carbon atoms). Examples of the substituent having an alkyl group include a group consisting of only an alkyl group; a group composed of an alkyl group and a phenylene group (-$C_6H_4$-); a group composed of an alkyl group and an ether group (-O-); and a group composed of an alkyl group, a phenylene group and an ether group. In this case, it is preferred that the rest of $R^1$ and $R^2$ is also an alkyl group of 8 or more carbon atoms (the alkyl group may be straight, branched or cyclic), an aryl group, an alkoxy group, an aryloxy group, or a hydrogen atom. It is particularly preferred that the rest of $R^1$ and $R^2$ is a hydrogen atom.

In formula (1), when B is an aromatic ring, a substituent on an aromatic ring excluding $R^1$, $R^2$, X and $L^1$ or $CO_2A$ may be an arbitrary substituent or a hydrogen atom, with the hydrogen atom being preferred. As the aromatic ring B, preferred are those having 6 to 18 carbon atoms, and more preferably 6 to 12 carbon atoms. Specific examples

of the aromatic ring include benzene ring, naphthalene ring, and anthracene ring, with the benzene ring being preferred.

Hereinafter, specific examples of the compound represented by formula (1) will be described. However, the present invention is not limited thereto. m and n each represent the average number of repeating units.

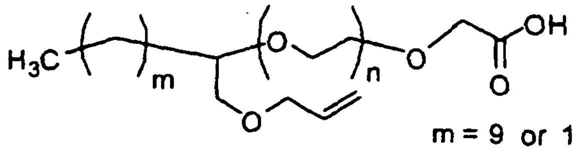

m = 9 or 11 n = 9 (Average value )

1-1

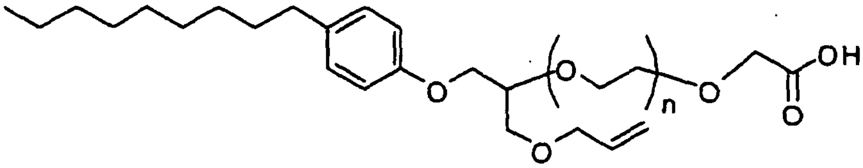

n =10

1-2

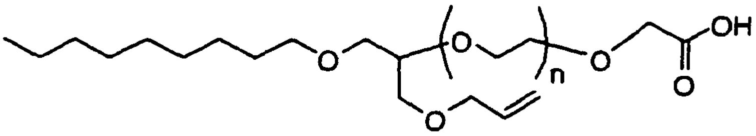

n =40

1-3

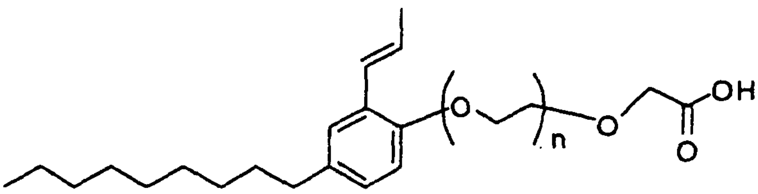

n =10

1-4

These compounds can be synthesized in accordance with various methods using ordinary techniques for the organic synthesis. However, it is preferable to synthesize the compound from a precursor compound having a hydroxyl group, a typical example is, a technique described in JP-A-7-18009, namely a reaction of the precursor compound having a hydroxyl group with sodium chloroacetate. Further, these compounds can be synthesized by oxidation of a hydroxyl group so as to convert the hydroxyl group to a carboxyl group. For example, there can be recited Jones oxidation using hexavalent chromiun as an oxidant and a method of using sodium chlorite described in J.Org. Chem.1999, 64, 2564.

In the producing method of the present invention, other dispersing agent may be further added, if necessary. As the other dispersing agent, use can be made of an anionic, cationic, amphoteric, nonionic, pigmentary, low-molecular-weight, or polymer dispersing agent. Examples of dispersing agent include those which are commercially available from Kao Corporation, Sanyo Chemical Industries, Ltd., Dai-ichi Kogyo Seiyaku Co., Ltd., Asahi Denka Kogyo K.K., Nippon Nyukazai Co., Ltd., Nippon Oil and Fats Co., Ltd., and the like. Specifically, dispersing agents described in "Leading-edge technology of Fine Particle/Powder, Ch. 1 3: Fine particle Design using Reaction Emulsifier, pp. 23-31 ", 2000 CMC, and JP-A-2005-307154 are preferably used.

In the production method of the present invention, other polymerizable compound (monomer) may be further added in addition to the polymerizable compound represented by formula (1). It is preferable to add a monomer copolymerizable with the polymerizable compound represented by formula (1). As the monomer, water-soluble or water-insoluble polymerizable compounds can be used. It is preferred that the monomer has a C=C bond. Specific examples thereof which can be used include: (meth)acrylic acid esters such as methyl acrylate, ethyl acrylate, butyl acrylate, benzyl acrylate, 2-ethylhexyl acrylate, phenyl acrylate, cyclohexyl acrylate, methyl methacrylate, ethyl methacrylate, butyl methacrylate, hexyl methacrylate, 2-ethylhexyl methacrylate, octyl methacrylate, cyclohexyl metharylate, β-hydroxyethyl acrylate, γ-aminopropyl acrylate, γ-hydroxypropyl acrylate, δ- hydroxybutyl acrylate, β-hydroxyethyl methacrylate, stearyl methacrylate, dimethylaminoethyl methacrylate, diethylene glycol methyl methacrylate, ethylene glycol ethyl dimethacrylate, tetraethylene glycol methyl dimethacrylate, and derivatives thereof; vinyl aromatic monomers such as styrene, o-methyl styrene, m-methyl styrene, p-methyl styrene, p-methoxy styrene, p-phenyl styrene, p-chlorostyrene, p-ethyl styrene, p-butyl styrene, p-t-butyl styrene, p-hexyl styrene, p-octyl styrene, p-nonyl styrene, p-decyl styrene, p-dodecyl styrene, 2,4-dimethyl styrene, 3,4-dichlorostyrene, α-methyl styrene, divinyl benzene, divinyl naphthalene, and derivatives thereof; vinyl esters such as vinyl acetate, vinyl propionate, vinyl benzoate, and derivatives thereof; and N-vinyl amides such as N-vinyl pyrrolidone; amide(meth)acrylates; alkyl-substituted (meth)acrylamides; methacryl amides; N-substituted maleimides; vinyl ethers such as vinyl methyl ether, vinyl ethyl ether, vinyl isobutyl ether, vinyl phenyl ether, divinyl ether, and derivatives thereof; olefins such as ethylene, propylene, isobutylene, 1-butene, 1-pentene, 4-methyl-1-penten, butadiene, isoprene, chloroprene, and derivatives thereof; diallyl phthalate; maleic anhydrides; (meth)acrylonitrile; methyl vinyl ketone; and vinylidene chloride.

Further, a water-soluble monomer having an anionic group such as a sulfonic group, a phosphoric group, or a carboxylic group is also used. An example thereof includes: a monomer having a carboxyl group such as acrylic acid, methacrylic acid, maleic acid, fumaric acid, itaconic acid, or p-vinyl benzoic acid; or an alkali metal salt, an alkaline earth metal salt, an ammonium salt, an amine salt or the like of the monomer. In addition, specific examples thereof include: styrene sulfonic acid, sodium styrene sulfonate, 2-acrylamide-2-methylpropane sulfonic acid, 2-hydroxy methyl methacryloyl phosphate, 2-hydroxy ethyl methacryloyl phosphate, and 3-chloro-2-hydroxy propyl methacryloyl phosphate. The monomers may be used alone or in combination.

The compound (monomer) may be dissolved in the organic pigment solution or the aqueous medium prior to mixing of these two liquids, or the compound may be added after mixing of these two liquids, but before polymerization process. Alternatively, the compound may be added simultaneously at the time when these two liquids are mixed (i.e., simultaneous addition of three or more liquids).

The polymerization method used in the method of producing an organic pigment fine particle dispersion of the present invention is not particularly limited, as long as it is capable of polymerizing a polymerizable compound in an organic pigment dispersion, and a method of polymerizing a polymerizable compound by generating a radical with a polymerization initiator is preferable. Although there are various factors for initiating polymerization, it is preferable to use heat, light, an ultrasonic wave, a microwave, or the like. As the polymerization initiator, a water-soluble or oil-soluble persulfate, peroxide, a compound having an azo group, or the like can be used, and a compound having an azo group is preferably used. Specific examples thereof include ammonium persulfate, potassium persulfate, sodium persulfate, hydrogen peroxide, t-butylhydroperoxide, 2,2'-azobisisobutylonitrile, 2,2'-azobis(2-amidinopropane) dihydrochloride, 2,2'-azobis(2-N-benzylamidinopropane) dihydrochloride, and 2,2'-azobis[2-N-(2-hydroxyethyl)amidinopropane] dihydrochloride. For example, the homepage (www.wako-chem.co.jp) of Wako Pure Chemical Industries, Ltd. describes various kinds of water-soluble azo polymerization initiator, oil-soluble azo polymerization initiator, and polymer azo polymerization initiator together with 10-hour half-life temperatures and the structural formulas thereof, which are available. Although the addition amount of the polymerization initiator is not particularly limited, it is preferably 0.1 to 30% by weight, more preferably 1 to 20% by weight, and most preferably 2 to 10% by weight with respect to the entire monomer components.

The polymerization initiator may be dissolved in the organic pigment solution or the aqueous medium prior to mixing of these two liquids, or the polymerization initiator may be added after mixing of these two liquids, but before polymerization process. Alternatively, the polymerization initiator may be added simultaneously at the time when these two liquids are mixed (i.e., simultaneous addition of three or more liquids).

In the producing method of the present invention, the polymerization reaction temperature is not particularly limited, but preferably 40°C to 100°C, and more preferably 50°C to 90°C. The polymerization reaction time is preferably 10 minutes to 24 hours, and more preferably 1 to 12 hours. In order to adjust the polymerization degree (molecular weight), various kinds of chain transfer agents (e.g., catechols, alcohols, thiols, mercaptans) may be used. The polymerization reaction is preferably performed in an inert gas, such as nitrogen and argon, to prevent invasion of oxygen.

In the method of producing an organic pigment fine particle dispersion of the present invention, various inorganic or organic functional additives may coexist in the dispersion liquid, irrespective of whether they are copolymerized or not. There is no particular limit to the functional additive, as long as it does not hinder the precipitation of fine particles and the stabilization of a dispersion, and examples thereof include a sequestering agent, a disinfectant, a fungicide, an

aroma chemical, an ultraviolet absorber, an antioxidant, a surface tension regulator, a water-soluble resin, a pH adjuster, and urea. There is no particular limit to a timing at which the functional additive is included. It may be properly selected from various timings such as addition to the organic pigment solution or the aqueous medium prior to mixing of these two liquids, simultaneous addition at the time of mixing these two liquids (namely simultaneous addition of three or more liquids), addition after mixing these two liquids but before polymerization process, and addition after polymerization process.

The pigment fine particle dispersion obtained in the producing method of the present invention can be purified, concentrated, and classified by filtering, centrifugation, or the like before and/or after polymerization. Further, in accordance with the use purpose, a solvent (a wetting agent, etc.), the above functional additives, and the like may be added to adjust the liquid physical property.

The organic pigment fine particle dispersion of the present invention is applicable for preferable inkjet ink, for example. The method thereof is for example as follows. The organic pigment fine particle dispersion of the present invention is purified and concentrated by centrifugation and/or ultrafiltration. Water-soluble organic solvent with a high boiling point such as glycerins and glycols are added to the resultant organic pigment dispersion to adjust the pH thereof to about 7 to 9. Further, an additive is added for the purpose of achieving satisfactory surface tension, viscosity, preservation, and the like, whereby inkjet ink can be prepared. The preferable viscosity for use in inkjet ink varies depending upon the kind and concentration of a pigment. In general, in the case of 5% by mass, the viscosity is preferably 20 mPa•s or less, more preferably 10 mPa•s (pascal second) or less, and most preferably 5 mPa•s or less.

In addition, the above-mentioned separation, concentration, adjustment of a liquid physical property, and the like are performed appropriately, whereby the organic pigment fine particle dispersion can be used widely in a color filter, or the like.

In this case, because the compound represented by formula (1) has both an organic residue as an oleophilic component and a carboxylic group as a hydrophilic functional group in the molecule, the compound exhibits good surface active function, which results in dispersion stability of organic pigment fine particles, as previously described. In addition, because the carboxylic group that is used as a hydrophilic functional group prevents corrosion and degradation, a good quality is kept for a long time even though the organic pigment fine particles are applied to fine chemicals having poor resistance to a sulfate ion.

Next, the organic pigment fine particles obtained by the producing method of the present invention will be described.

In measuring methods of fine particles, the average size of the group of the particles can be expressed by a numerical value. Examples of the numerical value which is widely used, include mode diameter, which shows the maximum value of the particle size distribution; medium diameter, which corresponds to the central value of the integration distribution curve thereof; and various average diameters (such as length average, area average, weight average, number average, and volume average). The particle diameter size of the organic pigment fine particles produced by a method of the present invention is any size in a range, e.g., that does not clog a flow path, and is preferably 1 μm or less, more preferably 3 nm to 800 nm, and particularly preferably 5 nm to 500 nm in terms of the mode diameter. Further, in the case of a fine particle dispersion of a nanometer size, which is required in inkjet ink of high image quality, the mode diameter of the organic pigment fine particles is set to be preferably 80 nm or less, more preferably 50 nm or less, and particularly preferably 30 nm or less.

Having a uniform particle size of fine-particles, i.e. having a monodisperse fine-particle system, is an important factor that decides performances of the particles, since not only it means that the particles included therein have uniform diameters but also it means that there is no fluctuation among particles in chemical composition and crystal structure inside the particles. In particular, this factor is regarded as important that governs the characteristics of the particles, in ultrafine-particles having nanometer order particle sizes. According to a method of producing an organic pigment fine particle dispersion of the present invention, it is possible not only to set fine particles with a small particle diameter, but also to control the size thereof to make it uniform. As an index representing the uniformity of a size, an arithmetic standard deviation value is used. The arithmetic standard deviation value of the pigment fine particles produced by a method of producing an organic pigment fine particle dispersion of the present invention is preferably 130 nm or less, more preferably 80 nm or less, and the peak of a particle size distribution can be made sharp. The arithmetic standard deviation value is obtained by dividing the value by two obtained by subtracting 16% particle diameter from 84% particle diameter of an integral distribution by a method of obtaining a standard deviation, assuming a particle size distribution as a normal distribution.

Further, a value (Mv/Mn) obtained by dividing a volume average particle diameter Mv by a number average particle diameter Mn may be expressed as the indicator of the degree of monodispersion. In the present invention, unless otherwise particularly specified, the monodispersity of the fine particles is represented as the value Mv/Mn, and when this value is closer to 1, the monodispersity is more excellent. In the organic pigment fine particles of the present invention, the value Mv/Mn is preferably 1.80 or less, more preferably 1.60 or less, and most preferably 1.40 or less. The volume average particle diameter Mv and the number average particle diameter Mn can be measured, for example, by a dynamic

light scattering method or the like.

Moreover, it is preferable that the organic pigment fine particles of the present invention are excellent in both dispersion stability and storage stability. An indicator of such the stabilities can be expressed as a change ratio of particle diameter by the heating storage treatment, specifically, as a change ratio of volume average particle diameter Mv (Change ratio of a volume average particle diameter: a value obtained by dividing "the volume average particle diameter Mv after the heating storage treatment" by "the volume average particle diameter Mv before the heating storage treatment", followed by subtracting 1). The change ratio of the organic pigment fine particles of the present invention is preferably 6.0% or less, more preferably 5.0% or less, and particularly preferably 4.0% or less, for example, when they are subjected to heating storage treatment at 60°C to 80°C for 50 to 300 hours.

Preferred embodiments of the present invention are as follows:

At the time of mixing the organic pigment solution and the aqueous medium, at least one of the flows of two liquids (the organic pigment solution and the aqueous medium) is divided into plural flows, and the two liquids are mixed by joining the flows so that a central axis of at least one of the plural divided flows and a central axis of the flow of the other liquid (i.e. the organic pigment solution when the aqueous medium is divided or the aqueous medium when the organic pigment solution is divided) intersect at one point in a junction region. In this embodiment, it is preferred that both of the flows of the organic pigment solution and the aqueous solution are divided into plural flows. This process is preferably performed using a microreactor having plural channels for supplying a solution, for example, a microreactor as illustrated in Fig. 5, 6, 7, 8 or the like.

Further, it is a preferred embodiment of the present invention that the mixing of the organic pigment solution and the aqueous medium is achieved by allowing the divided flows to flow through channels radially extending from a center of the junction region, toward the center of the junction region, to be joined at the region. This process is preferably performed using a microreactor as illustrated in Fig. 8 or the like.

In another preferred embodiment of the present invention, a continuous flow system is employed to control the liquid flow. The continuous flow system is a system wherein the channel is entirely filled with the liquids. In this embodiment, it is preferred that the liquids as a whole is driven by a pressure.

In still another preferred embodiment of the present invention, a liquid plug system is employed to control the liquid flow. The liquid flow system is a system wherein the droplet(s) of the liquids (the organic pigment solution and the aqueous medium) partitioned by air is formed and moved in the channel. In this embodiment, it is preferred that each of the droplets is driven by air pressure.

According to the method of producing an organic pigment fine particle dispersion of the present invention, organic pigment fine particles and an organic pigment fine particle dispersion with a small size and a sharp particle size distribution peak, having excellent dispersion stability and storage stability, can be obtained. In addition, the obtained organic pigment fine particles and the dispersion has no concern about corrosion and degradation that may be caused by a dispersing agent such as sulfuric acid ester type dispersing agent, when the organic pigment fine particles prepared for paints are applied on a metal substrate.

Further, according to a method of producing an organic pigment fine particle dispersion of the present invention, it is possible to produce the organic pigment fine particles and the dispersion having the above excellent properties continuously in a single bath, with a good efficiency and high purity, and if necessary, in a large quantity (by an enlarged scale).

The present invention will be described in more detail based on the following examples, but the present invention is not limited thereto.

## EXAMPLES

The pH shown in examples was measured with a glass electrode type hydrogen-ion concentration meter HM-40V (measurement range: pH 0 to 14) manufactured by Toa Denpa Kogyo Co. Ltd. The particle diameter distribution was measured with a Microtrack UPA150 manufactured by Nikkiso Co., Ltd. The viscosity was measured with an AMVn Automated Microviscometer (falling-ball capillary viscometer) manufactured by Anton Parr company.

(Synthetic example 1)

Compound 1-1 was synthesized by an oxidation reaction (Jones oxidation) that is shown in the following reaction scheme 1. An alcohol compound 1-A that is a raw material in this reaction was synthesized in the same manner as described in JP-A-7-18009.

(Reaction scheme 1)

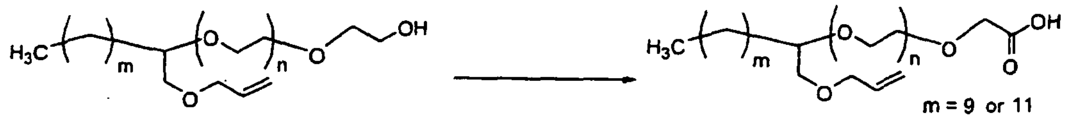

1-A

1-1

m = 9 or 11

n = 9 ( Average value )

A suspension containing 6.8g of chromium oxide (VI) (manufactured by Waco Pure Chemical Industries, 68 mmol) in 7 ml of water was ice-cooled. To the suspension, 6 ml of concentrated sulfuric acid was added drop-wise while maintaining an inner temperature of the suspension at 25 °C or less, and then stirred at room temperature for 20 minutes, followed by adding 20 ml of water. The resultant suspension was added to 19.0 g (27 mmol) of alcohol reactant 1-A in 120 ml of acetone while maintaining an inner temperature of the reactant solution at 25 °C or less by water-cooling. After stirring at room temperature for 2 hours, the suspension was filtrated. After eliminating almost all of acetone from the filtrate by evaporation under reduced pressure using an evaporator, 500 ml of ethyl acetate, 50 ml of methanol and 500 ml of saturated brine were added for separation. The resultant organic phase was dried with anhydrous sodium sulfate, followed by activated carbon treatment and Celite filtration. Thereafter, the solvent was eliminated by evaporation using an evaporator. 12.6 g (yield 65%) of Compound 1-1 was obtained as colorless and transparent oil. $^1$H-NMR (300 MHz, $CDCl_3$) of Compound 1-1: δ0.8-1.6 (m, about 25H), δ3.3-4.1 (m, about 40H), δ4.16 (s, 2H), δ5.1-5.4 (m, 2H), δ5.8-6.0 (m, 1H)

(Synthetic example 2)

Compound 1-1 was synthesized by an oxidation reaction similar to the above reaction (i.e. an oxidation reaction of the alcohol reactant 1-A), but by a method of using sodium chlorite described in J.Org. Chem.1999, 64, 2564. The compound was obtained in 62% yield. This method is more excellent in environmental viewpoint than the method of using a hexavalent chromiun that is a heavy metal.

Example 1

6.0 g of Pigment Yellow 128 (CROMOPHTAL YELLOW 8GNP, manufactured by Ciba Specialty Chemicals company) was dissolved in 135 mL of dimethylsulfoxide at room temperature together with 7.8 mL of methanol solution (manufactured by Wako Pure Chemical Industries, Ltd.) of 28% sodium methoxide, 9.6 g of the compound (1-1), 1.2g of N-vinylpyrrolidone (manufactured by Wako Pure Chemical Industries, Ltd., used after subjecting to purification by distillation under reduced pressure), 0.3 g of polyvinylpyrrolidone K30 (manufactured by Tokyo Kasei Kogyo Co., Ltd.), and 3.0 g of VPE-0201 (manufactured by Wako Pure Chemical Industries, Ltd.) (IE solution). The pH of the IE solution exceeded a measuring limit (pH 14), which was not able to be measured. Distilled water was designated as a IIE solution. They were allowed to pass through a micro-filter of 0.45 μm (manufactured by Sartorius Co.), whereby impurities such as dust were removed.

As the microreactor, a three-dimensional microreactor as shown in Fig 8 having the following division number (the number of flow paths) and the like was used.

(i) Number of supply flow paths (n) ... divided into 5 with respect to each of two kinds of reaction solutions (10 flow paths in total are joined. In the microreactor shown in Fig. 8, eight flow paths in total (four each) are joined.)
(ii) Width (W) of the supply flow paths 91, 92 ... 400 μm each
(iii) Depth (H) of the supply flow paths 91, 92 ... 400 μm each
(iv) Diameter (D) of the junction region 90 ... 800 μm
(v) Diameter (R) of the micro-flow path 93 ... 800 μm
(vi) Cross angle of center axes of the respective supply flow paths 91, 92 and the micro-flow path 93 in the junction region 90 ... 90°
(vii) Material for the microreactor ... Stainless steel (SUS 304)
(viii) Flow path processing method ... Micro-discharge processing method was performed, and three parts of the supply block 81, the junction block 82, and the reaction block 83 were sealed with a metal surface seal by mirror grinding. Two Teflon (Registered Trademark) tubes having a length of 50 cm and an equivalent diameter of 1 mm were connected to two inlets with a connector, and syringes respectively containing the IE and IIE solutions were

connected to the ends of the inlets and set at a pump. A Teflon (Registered Trademark) tube having a length of 1.5 m and an equivalent diameter of 2 mm was connected to an outlet of the connector. The IE solution was sent out at a solution sending speed of 150 mL/min, and the IIE solution was sent out at a solution sending speed of 600 mL/min. A dispersion liquid of fine particles of Pigment Yellow 128 was collected from the tip end of the outlet of the tube, and designated as Sample 1a. The pH of the sample 1a was about 13.2. The volume average particle diameter Mv of the organic pigment fine particles was 33.7 nm, and the ratio of Volume average particle diameter Mv/Number average particle diameter Mn that is the indicator of the degree of monodispersion was 1.67.

Further, the resultant liquid was subjected to a deaeration treatment by bubbling with nitrogen gas. After heating at 80 °C for 5 hours, Sample 1b was obtained. The Volume average particle diameter Mv of the organic pigment fine particles of the sample 1b was 39.4 nm, and the ratio of Volume average particle diameter Mv/Number average particle diameter Mn that is the indicator of the degree of monodispersion was 1.68.

The samples 1a and 1b were purified with an ultrafilter (UHP-62K, differential molecular weight: 50,000, manufactured by Advantec Co., Ltd.) while distilled water was added so that the liquid amount was kept. Subsequently, the samples 1 a and 1 b were subjected to heating storage treatment, respectively, at 60°C for 100 hours. The change ratio of the volume average particle diameter of the sample 1a was 4.3%, and the change ratio of the volume average particle diameter of the sample 1b was 2.3%. Consequently, it is understood that the stability was enhanced by polymerization.

Further, the sample 1 b was purified and concentrated with an ultrafilter (UHP-62K, differential molecular weight: 50,000, manufactured by Advantec Co., Ltd.) while a filtrate was discharged. After this, the concentration was adjusted to obtain a 5.0 % by mass of dispersion. The viscosity thereof was 3.8 mPa-s. Then, the dispersion was subjected to heating storage treatment at 60°C for 100 hours, and further for 240 hours, with the results that the viscosity hardly changed (i.e., 3.9 mPa·s in both measurements). On the other hand, when the sample 1a was purified and concentrated to 5.0% by mass similarly, the viscosity thereof was 8.9 mPa·s. When the sample 1a was further subjected to heating storage treatment at 60°C, the precipitation was observed at a time of storage for 100 hours. The excellent viscosity stability that maintains a particular viscosity even after the heating storage treatment verifies the long-term storage stability, for example, when the sample is used as inkjet ink, and shows that the sample is more preferable as ink.

Comparative Example 1

Samples 2a and 2b were obtained in the same manner as Samples 1a and 1b, respectively, except that the Compound 1-1 used in Example 1 was replaced by sodium polyoxyethylenelaurylether acetate (Compound 2-1) that is known as a carboxylic acid-type surface active agent. The Volume average particle diameter Mv of the fine particles in sample 2a was 39.7 nm, and the ratio of Volume average particle diameter Mv/Number average particle diameter Mn that is the indicator of the degree of monodispersion was 1.87. The Volume average particle diameter Mv of the fine particles in sample 2b was 40.5 nm, and the ratio of Volume average particle diameter Mv/Number average particle diameter Mn that is the indicator of the degree of monodispersion was 1.88. Further, the samples 2a and 2b were concentrated similarly with an ultrafilter to obtain a 5.0 % by mass of dispersion. The viscosity thereof were 7.7 mPa-s and 7.5 mPa·s, respectively. When the samples 2a and 2b were further subjected to heating storage treatment at 60°C, the precipitation was observed in each of the sample 2a and 2b at a time of storage for 100 hours. As a result, the sample using Compound 2-1 after being subjected to the heat treatment did not exhibit excellent dispersion stability and storage stability as that of Sample 1b using Compound 1-1.

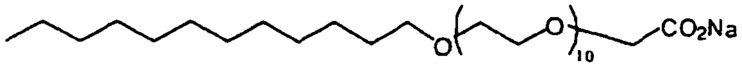

2-1

Example 2

Sample 3b was obtained in the same manner as Sample 1b, except that pigment yellow 128 was replaced by an equivalent amount of pigment red 254 (manufactured by Ciba Specialty Chemicals, CROMOPHTAL RED 2030). With respect to the Sample 3b, similar tests were performed by the same operation and measurement method as the Sample 1b. The thus-obtained results are shown in Table 1.

Comparative Example 2

Sample 4b was obtained in the same manner as Sample 1b, except that pigment yellow 128 was replaced by

an equivalent amount of pigment red 254 (manufactured by Ciba Specialty Chemicals, CROMOPHTAL RED 2030), and further dispersing agent 1-1 was replaced by an equivalent amount of dispersing agent 2-1. With respect to the Sample 4b, similar tests were performed by the same operation and measurement method as the Sample 1b. The thus-obtained results are shown in Table 1.

Table 1

| | Sample No. | Kind of pigment | Dispersing agent | Mv (nm) | Mv/Mn | Viscosity (mPa.s) | | |
|---|---|---|---|---|---|---|---|---|
| | | | | | | Before heating | 60°C 100h | 60°C 240h |
| Example 1 | 1b | Pigment Yellow 128 | 1-1 | 39.4 | 1.68 | 3.8 | 3.9 | 3.9 |
| Comparative example 1 | 2b | Pigment Yellow 128 | 2-1 | 40.5 | 1.88 | 7.5 | generation of precipitation | generation of precipitation |
| Example 2 | 3b | Pigment Red 254 | 1-1 | 37.4 | 1.55 | 4.7 | 4.9 | 5.0 |
| Comparative example 2 | 4b | Pigment Red 254 | 2-1 | 39.2 | 1.60 | 6.0 | generation of precipitation | generation of precipitation |
| Note: There was no formation of the precipitation in the case where numerical values are described in the column of viscosity. | | | | | | | | |

From the results, it is understood that the production method of the present invention can produce nanometer size fine particles with a sharp peak of the particle size distribution, even if a different types of organic pigments are used, and a resultant dispersion thereof exhibits excellent dispersion stability.

## Claims

**1.** A method of producing an organic pigment fine particle dispersion, which comprises the steps of:

providing a solution of an organic pigment and an aqueous medium, wherein a polymerizable compound represented by formula (1) is contained in at least one of the organic pigment solution and the aqueous medium; mixing the solution and the aqueous medium to form fine particles of the pigment dispersed; and then polymerizing the polymerizable compound;

Formula ( 1 )

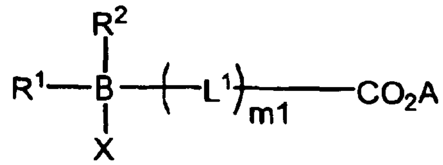

wherein, A represents a hydrogen atom, a lithium, sodium or potassium atom, an ammonium group or an alkyl ammonium group; X represents a substituent having a C=C bond; B represents a carbon atom or an aromatic ring; $L^1$ represents a divalent linking group; ml represents 0 or an integer greater than 0; $R^1$ and $R^2$ each independently represent a hydrogen atom or a substituent, and at least one of $R^1$ and $R^2$ is a substituent having an alkyl group of 8 or more carbon atoms.

**2.** The method of producing an organic pigment fine particle dispersion according to claim 1, further comprising the steps of:

flowing the organic pigment solution and the aqueous medium into a channel to be a laminar flow; and
mixing said solution and said medium for bringing them into contact each other during passage in the channel by the laminar flow.

**3.** The method of producing an organic pigment fine particle dispersion according to claim 1 or 2, further comprising the steps of:

flowing the organic pigment solution and the aqueous medium into a channel having an equivalent diameter of 1 mm or less; and
mixing said solution and said medium for bringing them into contact each other.

**4.** The method of producing an organic pigment fine particle dispersion according to any one of claims 1 to 3, wherein the substituent X is a substituent having a group selected from the group consisting of a vinyloxy group, an aryloxy group, a styryl group, an acryloyl group, and a methacryloyl group.

**5.** The method of producing an organic pigment fine particle dispersion according to any one of claims 1 to 4, wherein the substituent X is a substituent having an aryloxy group.

**6.** The method of producing an organic pigment fine particle dispersion according to any one of claims 1 to 5, wherein the linking group $L^1$ is a linking group having an ethyleneoxy group as a repeating unit.

**7.** The method of producing an organic pigment fine particle dispersion according to any one of claims 1 to 6, wherein the organic pigment solution is a solution of the organic pigment dissolved in the presence of an alkali.

**8.** The method of producing an organic pigment fine particle dispersion according to any one of claims 1 to 7, wherein the polymerizable compound is polymerized by radical polymerizing reaction under heating at a temperature of 50 °C or more in the presence of a compound having an azo group.

**9.** The method of producing an organic pigment fine particle dispersion according to any one of claims 1 to 8, wherein at least one of the organic pigment solution and the aqueous medium contains at least one monomer that can be copolymerized with the compound represented by formula (1).

**10.** The method of producing an organic pigment fine particle dispersion according to any one of claims 1 to 9, further comprising the steps of:

dividing at least one of liquid flows of the organic pigment solution and the aqueous medium, into plural divided flows, and
joining at least one of the plural divided flows to the other liquid flow in the manner that central axes of said flows intersect at one point in a junction region, and thereby
mixing the organic pigment solution and the aqueous medium.

**11.** The method of producing an organic pigment fine particle dispersion according to claim 14, further comprising the steps of:

providing channels radially extending from a center of the junction region, and
flowing the plural divided flows towards the center of the junction region, thereby joining the liquid flows at the region.

**12.** The method of producing an organic pigment fine particle dispersion according to any one of claims 1 to 11, wherein a continuous flow system is employed to control the liquid flow.

**13.** The method of producing an organic pigment fine particle dispersion according to claim 12, wherein the channel is entirely filled with the liquids.

**14.** The method of producing an organic pigment fine particle dispersion according to any one of claims 1 to 11, wherein a liquid plug system is employed to control the liquid flow.

**15.** The method of producing an organic pigment fine particle dispersion according to claim 14, wherein a droplet

partitioned by air is formed and made to move in the channel.

16. An organic pigment fine particle dispersion, which is obtained by the producing method according to any one of claims 1 to 15, and comprises organic pigment fine particles having a mode diameter of 1 μm or less.

17. Organic pigment fine particles, which are obtained by the producing method according to any one of claims 1 to 15, and have a mode diameter of 1 μm or less.

## Patentansprüche

1. Verfahren zur Herstellung einer organischen Pigment-Feinpartikeldispersion, das folgende Schritte umfasst:

   Bereitstellen einer Lösung eines organischen Pigments und eines wässrigen Mediums, wobei eine polymerisierbare Verbindung der Formel (1) in mindestens der organischen Pigmentlösung und/oder dem wässrigen Medium enthalten ist;
   Mischen der Lösung und des wässrigen Mediums, wodurch feine Partikel der dispergierten Pigmente gebildet werden; und dann
   Polymerisieren der polymerisierbaren Verbindung;

   Formel ( 1 ) :

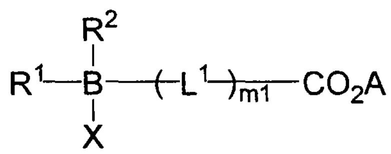

   worin A ein Wasserstoffatom, Lithium, Natrium oder Kaliumatom, eine Ammoniumgruppe oder eine Alkylammoniumgruppe ist; X ein Substituent mit einer C=C-Doppelbindung ist; B ein Kohlenstoffatom oder ein aromatischer Ring ist; $L^1$ eine divalente Verbindungsgruppe ist; ml 0 oder eine ganze Zahl grösser als 0 ist; $R^1$ und $R^2$ jeweils unabhängig voneinander ein Wasserstoffatom oder ein Substituent sind und mindestens eines von $R^1$ und $R^2$ ein Substituent ist, der eine Alkylgruppe mit 8 oder mehr Kohlenstoffatomen aufweist.

2. Verfahren zur Herstellung einer organischen Pigment-Feinpartikeldispersion gemäss Anspruch 1, das weiterhin die Schritte umfasst:

   Fliessen der organischen Pigmentlösung und des wässrigen Mediums in einem Kanal mit laminarem Fluss; und
   Mischen der Lösung und des Mediums, wodurch sie während des Kanaldurchflusses durch den laminaren Fluss miteinander in Kontakt gebracht werden.

3. Verfahren zur Herstellung einer organischen Pigment-Feinpartikeldispersion gemäss Anspruch 1 oder 2, das weiterhin die Schritte umfasst:

   Fliessen der organischen Pigmentlösung und des wässrigen Mediums in einem Kanal, der einen äquivalenten Durchmesser von 1 mm oder weniger aufweist; und
   Mischen der Lösung und des Mediums, wodurch sie miteinander in Kontakt gebracht werden.

4. Verfahren zur Herstellung einer organischen Pigment-Feinpartikeldispersion gemäss mindestens einem der Ansprüche 1 bis 3, wobei der Substituent X ein Substituent ist, der eine Gruppe, ausgewählt aus einer Vinyloxygruppe, einer Aryloxygruppe, einer Stirylgruppe, einer Acryloylgruppe und einer Methacryloylgruppe, aufweist.

5. Verfahren zur Herstellung einer organischen Pigment-Feinpartikeldispersion gemäss mindestens einem der Ansprüche 1 bis 4, wobei der Substituent ein Substituent mit einer Aryloxygruppe ist.

6. Verfahren zur Herstellung einer organischen Pigment-Feinpartikeldispersion gemäss mindestens einem der Ansprüche 1 bis 5, wobei die Verbindungsgruppe $L^1$ eine Verbindungsgruppe ist, die eine Ethylenoxygruppe als Wiederholungseinheit aufweist.

**7.** Verfahren zur Herstellung einer organischen Pigment-Feinpartikeldispersion gemäss mindestens einem der Ansprüche 1 bis 6, wobei die organische Pigmentlösung eine Lösung ist, bei der das organische Pigment in Gegenwart von Alkali gelöst wurde.

**8.** Verfahren zur Herstellung einer organischen Pigment-Feinpartikeldispersion gemäss mindestens einem der Ansprüche 1 bis 7, wobei die polymerisierbare Verbindung durch Radikalpolymerisationsreaktion unter Erwärmen bei einer Temperatur von 50°C oder mehr in Gegenwart einer Verbindung mit einer Azogruppe polymerisiert wird.

**9.** Verfahren zur Herstellung einer organischen Pigment-Feinpartikeldispersion gemäss mindestens einem der Ansprüche 1 bis 8, wobei mindestens die organische Pigmentlösung und/oder das wässrige Medium mindestens ein Monomer enthält, das mit der Verbindung der Formel (1) copolymerisierbar ist.

**10.** Verfahren zur Herstellung einer organischen Pigment-Feinpartikeldispersion gemäss mindestens einem der Ansprüche 1 bis 9, das weiterhin die Schritte umfasst:

Teilen mindestens einer Fliessströmung der organischen Pigmentlösung und/oder des wässrigen Mediums in mehrere geteilte Strömungen, und
Verbinden mindestens eines der mehreren geteilten Strömungen mit den anderen Fliessströmungen in der Weise, dass die zentralen Achsen der Strömungen sich in einem Punkt an der Abzweigstelle durchkreuzen, wodurch die organische Pigmentlösung und das wässrige Medium gemischt werden.

**11.** Verfahren zur Herstellung einer organischen Pigment-Feinpartikeldispersion gemäss Anspruch 10, das weiterhin die Schritte umfasst:

Bereitstellen von Kanälen, die sich radial vom Zentrum der Abzweigungsstelle erstrecken, und
Fliessen der mehreren geteilten Strömungen zum Zentrum der Abzweigungsstelle, wodurch die Fliessströmungen an dieser Stelle zusammengeführt werden.

**12.** Verfahren zur Herstellung einer organischen Pigment-Feinpartikeldispersion gemäss mindestens einem der Ansprüche 1 bis 11, wobei ein kontinuierliches Strömungssystem angewandt wird, um die Fliessströmungen zu kontrollieren.

**13.** Verfahren zur Herstellung einer organischen Pigment-Feinpartikeldispersion gemäss Anspruch 12, wobei der Kanal vollständig mit den Flüssigkeiten gefüllt ist.

**14.** Verfahren zur Herstellung einer organischen Pigment-Feinpartikeldispersion gemäss mindestens einem der Ansprüche 1 bis 11, wobei ein flüssiges Absperrsystem angewandt wird, um die Fliesströmungen zu kontrollieren.

**15.** Verfahren zur Herstellung einer organischen Pigment-Feinpartikeldispersion gemäss Anspruch 14, wobei ein Tropfen durch Luft aufgeteilt und in dem Kanal bewegt wird.

**16.** Organische Pigment-Feinpartikeldispersion, die durch das Herstellungsverfahren gemäss mindestens einem der Ansprüche 1 bis 15 erhältlich ist und die organische Pigment-Feinpartikel mit einem Betriebsdurchmesser von 1 µm oder weniger umfasst.

**17.** Organische Pigment-Feinpartikel, die durch das Herstellungsverfahren gemäss mindestens einem der Ansprüche 1 bis 15 erhältlich sind und die einen Betriebsdurchmesser von 1 µm oder weniger aufweisen.

### Revendications

**1.** Procédé de production d'une dispersion de fines particules de pigment organique, lequel comprend les étapes consistant :

à fournir une solution d'un pigment organique et d'un milieu aqueux, dans lequel un composé polymérisable

représenté par la formule (1) est contenu dans au moins un de la solution de pigment organique et du milieu aqueux ;

à mélanger la solution et le milieu aqueux pour former de fines particules du pigment dispersé ; et ensuite

à polymériser le composé polymérisable ;

Formule (1)

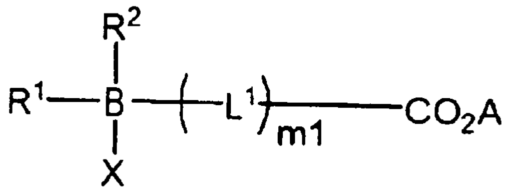

dans laquelle, A représente un atome d'hydrogène, un atome de lithium, de sodium ou de potassium, un groupe ammonium ou un groupe alkylammonium ; X représente un substituant présentant une liaison C=C ; B représente un atome de carbone ou un noyau aromatique ; $L^1$ représente un groupe de liaison divalent, m1 représente 0 ou un nombre entier supérieur à 0 ; $R^1$ et $R^2$ représentent chacun indépendamment un atome d'hydrogène ou un substituant et au moins un de $R^1$ et $R^2$ est un substituant présentant un groupe alkyle ayant 8 atomes de carbone ou plus.

**2.** Procédé de production d'une dispersion de fines particules de pigment organique selon la revendication 1 comprenant en plus les étapes consistant :

à faire écouler la solution de pigment organique et le milieu aqueux dans un tunnel pour un écoulement laminaire ; et

à mélanger ladite solution et ledit milieu pour les mettre en contact l'un avec l'autre pendant le passage dans le tunnel par l'écoulement laminaire.

**3.** Procédé de production d'une dispersion de fines particules de pigment organique selon la revendication 1 ou 2 comprenant en plus les étapes consistant :

à faire s'écouler la solution de pigment organique et le milieu aqueux dans un tunnel présentant un diamètre équivalent de 1 mm ou inférieur ; et

à mélanger ladite solution et ledit milieu pour les mettre en contact l'un avec l'autre.

**4.** Procédé de production d'une dispersion de fines particules de pigment organique selon l'une quelconque des revendications 1 à 3, dans lequel le substituant X est un substituant présentant un groupe choisi dans le groupe constitué d'un groupe vinyloxy, d'un groupe aryloxy, d'un groupe styryle, d'un groupe acryloyle et d'un groupe méthacryloyle.

**5.** Procédé de production d'une dispersion de fines particules de pigment organique selon l'une quelconque des revendications 1 à 4, dans lequel le substituant X est un substituant présentant un groupe aryloxy.

**6.** Procédé de production d'une dispersion de fines particules de pigment organique selon l'une quelconque des revendications 1 à 5, dans lequel le groupe de liaison $L^1$ est un groupe de liaison présentant un groupe éthylèneoxy comme unité répétitive.

**7.** Procédé de production d'une dispersion de fines particules de pigment organique selon l'une quelconque des revendications 1 à 6, dans lequel la solution de pigment organique est une solution du pigment organique dissous en présence d'un alcali.

**8.** Procédé de production d'une dispersion de fines particules de pigment organique selon l'une quelconque des revendications 1 à 7, dans lequel le composé polymérisable est polymérisé par une réaction de polymérisation radicalaire sous chauffage à une température de 50°C ou supérieure en présence d'un composé présentant un groupe azo.

**9.** Procédé de production d'une dispersion de fines particules de pigment organique selon l'une quelconque des revendications 1 à 8, dans lequel au moins un de la solution de pigment organique et du milieu aqueux contient au moins un monomère qui peut être copolymérisé avec le composé représenté par la formule (1).

**10.** Procédé de production d'une dispersion de fines particules de pigment organique selon l'une quelconque des revendications 1 à 9 comprenant en plus les étapes consistant :

à diviser au moins un des écoulements liquides de la solution de pigment organique et du milieu aqueux en plusieurs écoulements divisés, et
à joindre au moins un des plusieurs écoulements divisés à l'autre écoulement liquide de telle sorte que les axes centraux desdits écoulements se coupent en un point dans une région de jonction, et par là
à mélanger la solution de pigment organique et le milieu aqueux.

**11.** Procédé de production d'une dispersion de fines particules de pigment organique selon la revendication 10, comprenant en plus les étapes consistant :

à fournir des canaux s'étendant radialement à partir d'un centre de la région de jonction, et
à faire s'écouler les plusieurs écoulements divisés vers le centre de la région de jonction, joignant par là les écoulements liquides en la région.

**12.** Procédé de production d'une dispersion de fines particules de pigment organique selon l'une quelconque des revendications 1 à 11, dans lequel on utilise un système d'écoulement continu pour contrôler l'écoulement liquide.

**13.** Procédé de production d'une dispersion de fines particules de pigment organique selon la revendication 12, dans lequel le canal est entièrement rempli avec les liquides.

**14.** Procédé de production d'une dispersion de fines particules de pigment organique selon l'une quelconque des revendications 1 à 11, dans lequel on utilise un système de piston liquide pour contrôler l'écoulement liquide.

**15.** Procédé de production d'une dispersion de fines particules de pigment organique selon la revendication 14, dans lequel une gouttelette divisée par de l'air est formée et est amenée à se déplacer dans le canal.

**16.** Dispersion de fines particules de pigment organique qui est obtenue par le procédé de production selon l'une quelconque des revendications 1 à 15, et qui comprend de fines particules de pigment organique présentant un diamètre de mode de 1 μm ou inférieur.

**17.** Fines particules de pigment organique qui sont obtenues par le procédé de production selon l'une quelconque des revendications 1 à 15 et qui présentent un diamètre de mode de 1 μm ou inférieur.

# FIG. 1-1

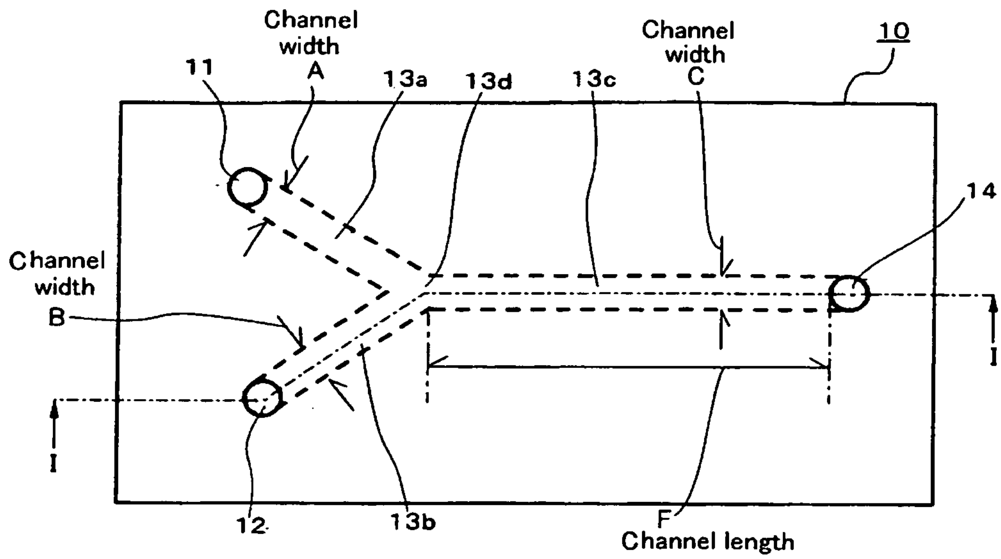
Channel width A
11
13a
13d
13c
Channel width C
10
14
Channel width B
I
I
12
13b
F
Channel length

FIG. 1-2

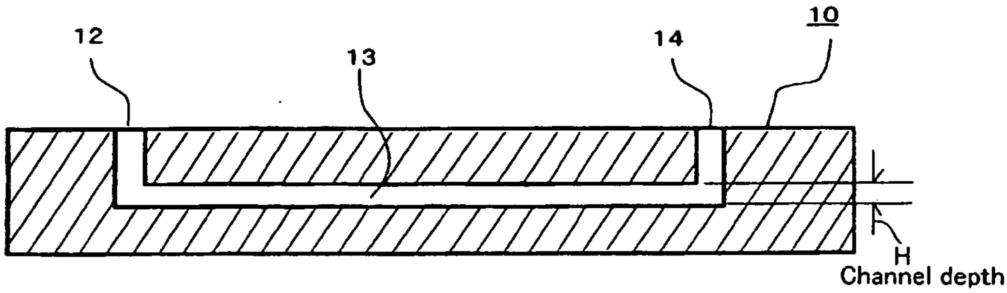

*FIG. 2-1*

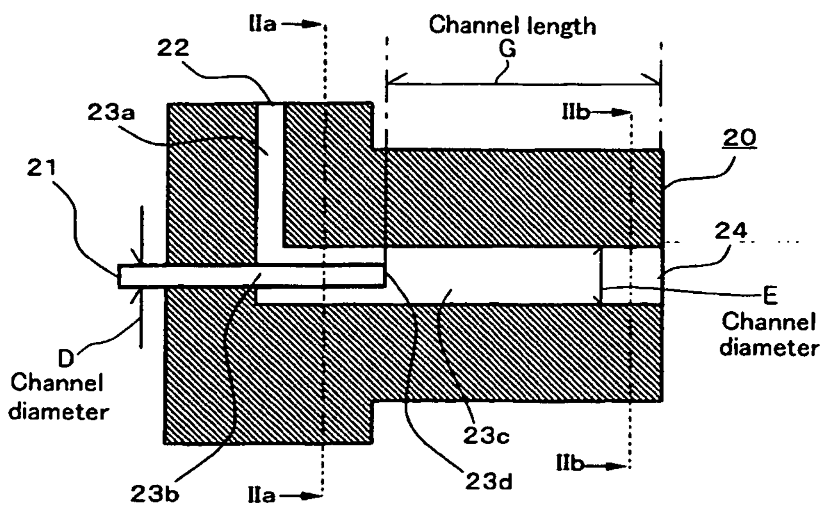
IIa
22
Channel length
G
IIb
23a
20
21
24
E
Channel
diameter
D
Channel
diameter
23c
IIb
23b
IIa
23d

FIG. 2-2

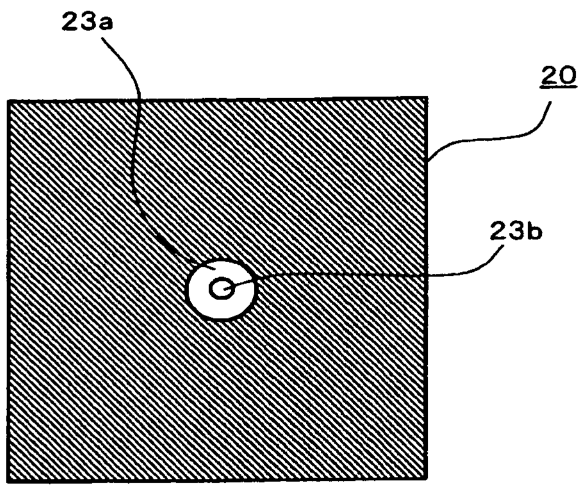

FIG. 2-3

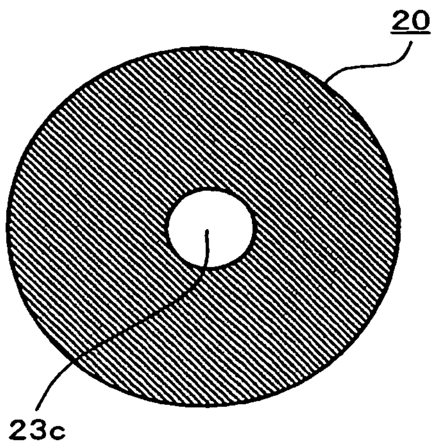

FIG. 3-1

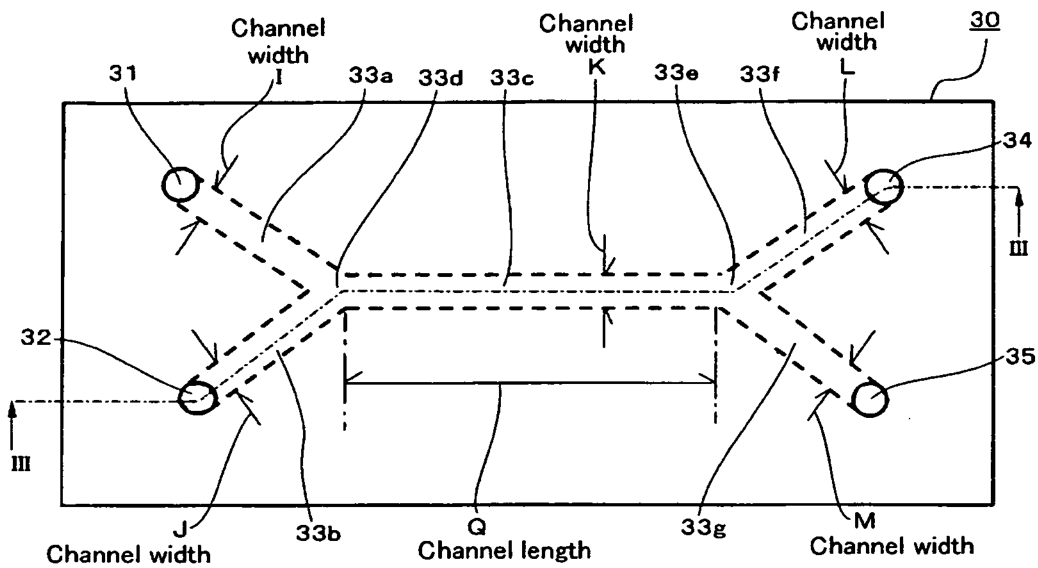
Channel width I
31
33a
33d
33c
Channel width K
33e
33f
Channel width L
30
34
III
32
35
III
J Channel width
33b
Q Channel length
33g
M Channel width

FIG. 3-2

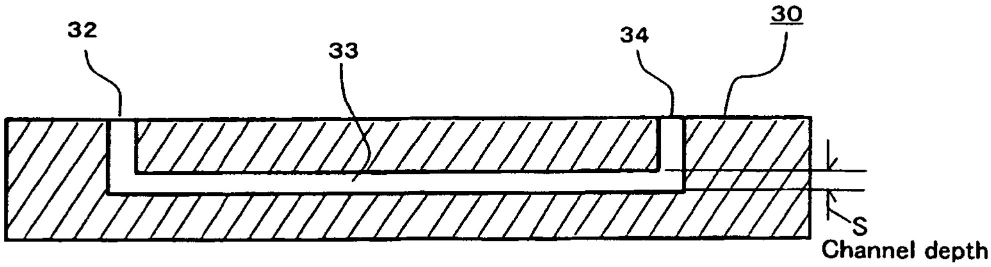

FIG. 4

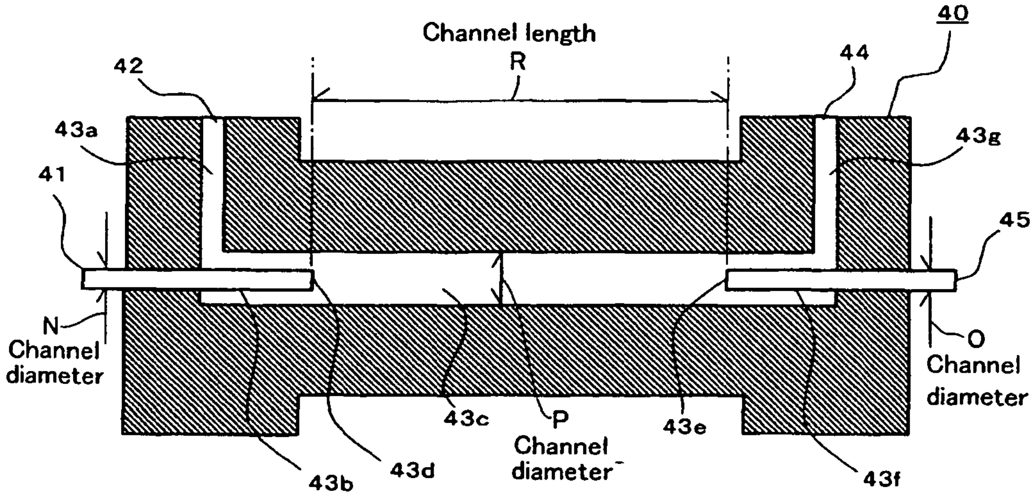
40
Channel length
R
42
44
43a
43g
41
45
N
Channel diameter
O
Channel diameter
43c
P
Channel diameter
43e
43b
43d
43f

FIG. 5

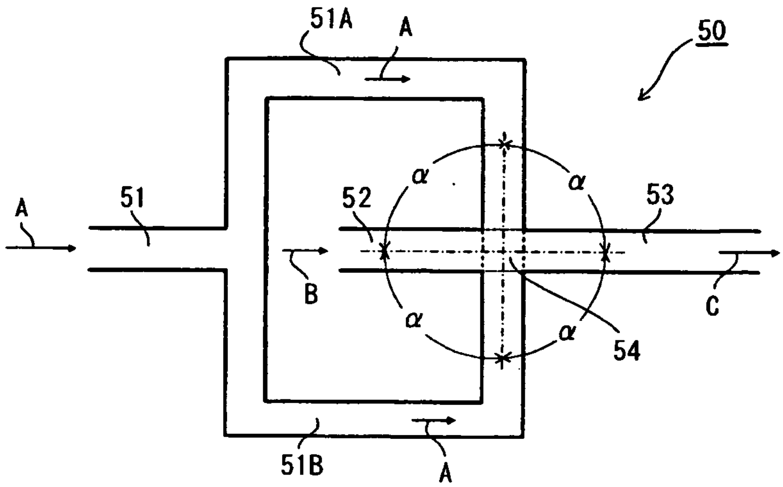

FIG. 6

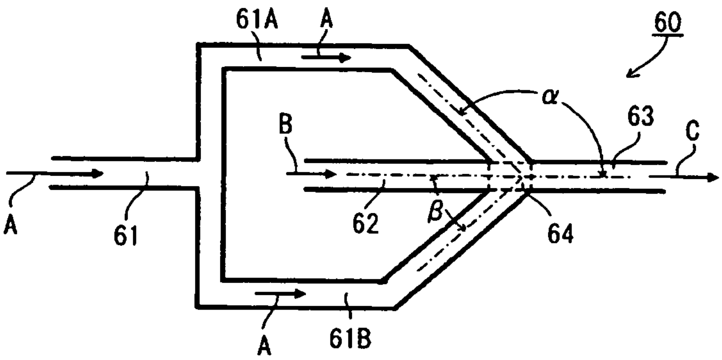

*FIG. 7*

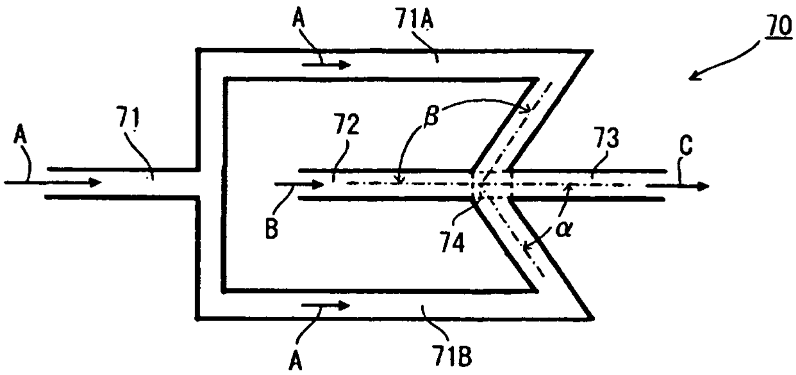

FIG. 8

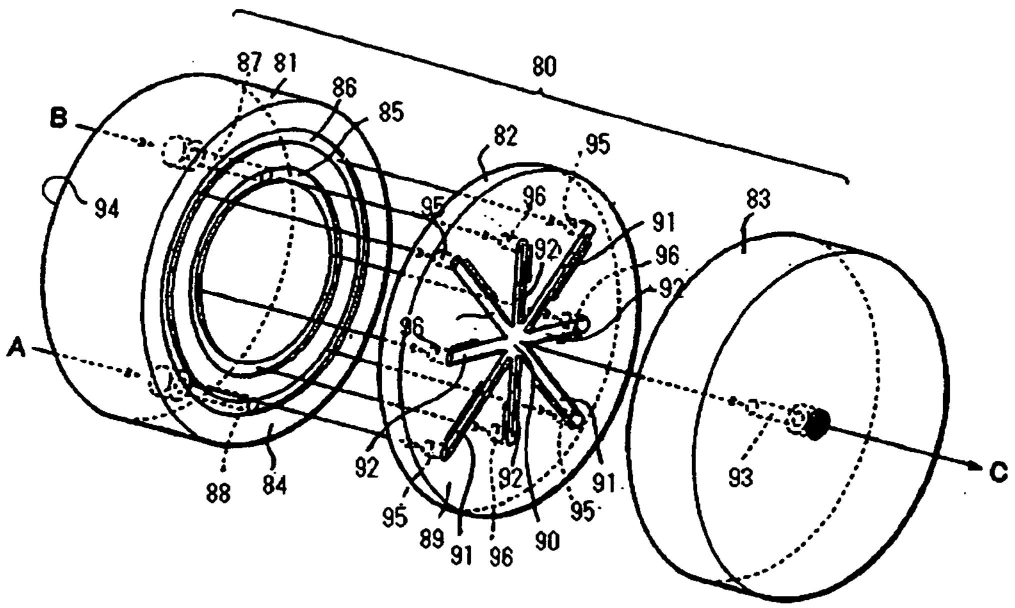
80
87
81
86
85
B
82
95
94
83
96
91
92
96
92
A
96
C
92
93
88
84
95
92
91
95
89
91
96
90

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 10316909 A
- JP 2005097517 A
- EP 1516896 A1
- JP 2005307154 A
- US 20060057485 A
- JP 2003210960 A
- JP 2003210963 A
- JP 2003210959 A
- JP 2005046650 A
- JP 2005046651 A
- JP 2005046652 A
- JP 2005288254 A
- JP 7018009 A


### Non-patent literature cited in the description


- Dispersion Stabilization of Pigment and Surface Treatment Technique/Evaluation. Technical Information Institute Co., Ltd, 2001, 123-224
- Experimental Chemical Lecture, 4th Edition. Maruzen Co., Ltd, vol. 12, 411-488
- Preparation and Dispersion/Aggregation Control of nano-fine particles and evaluation thereof. Technical Information Association, 2003
- Increase in Resolution with Aqueous Pigment Ink. **KENGO YASUI ; KOZUE SUNOUCHI.** DIC TECH REV. Dainippon Ink and Chemicals, Inc, 2004, 11-18
- Microcapsulated Pigment Jet Ink. **HIROSHI HARADA ; SADAHIRO INOUE.** DIC Tech Rev. Dainippon Ink and Chemicals, Inc, 2003, 1-7
- Micro/Nano Capsul Technique, Microcapsulation of Pigment, and Application to Ink Jet. **MASAO TANAKA.** Industrial Material. Dainippon Ink and Chemicals, Inc, 2004, vol. 52, 42-45
- Kikai Kougaku Jiten. Maruzen, K. K, 1997
- **W. EHRFELD ; V. HESSEL ; H. LOEWE.** Microreactor. Wiley-VCH, 2000
- *J.Org. Chem.,* 1999, vol. 64, 2564
- Leading-edge technology of Fine Particle/Powder. Fine particle Design using Reaction Emulsifier. CMC, 2000, 23-31